# EUROPEAN PATENT APPLICATION

(11) **EP 4 716 153 A1**
(43) Date of publication of application: **25.03.2026**
(21) Application number: 23936962.2
(22) Date of filing: 15.05.2023
(51) Int. Cl.: H04L 9/40

(54) **INTERNET PROTOCOL ADDRESS CHECK METHOD AND APPARATUS FOR EDGE COMPUTING SCENARIO**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2023/094384
(87) International publication number: WO 2024/234275

(57) **Abstract**

Disclosed in the embodiments of the present disclosure are an internet protocol (IP) address check method and apparatus, which may be applied to an edge computing scenario. The method comprises: a bootstrapping server function (BSF) acquiring an IP address to be checked, which is provided by a terminal device, and first verification information of said IP address; and according to said IP address and/or the first verification information, the BSF determining whether said IP address is a real IP address of the terminal device. By means of the embodiments of the present disclosure, it is possible to solve the problem of there being a lack of effective means for verifying an IP address, which is provided by a terminal device, in an edge computing scenario, such that the communication security of the edge computing scenario can be improved.

## Description

### TECHNICAL FIELD

The present disclosure relates to a field of communication technologies, and particularly to a method of Internet protocol (IP) address verification for an edge computing scenario and an apparatus thereof.

### BACKGROUND

In an edge computing scenario, an edge server may determine whether a specific service may be provided to a specific terminal (user equipment, UE) using an edge terminal identifier (edge UE identifier, also referred to as edge UE ID). In a 5G system, a 5G core network (5GC) may assign an IP (Internet protocol) address to each EEC (edge enabler client)/UE. In order to acquire the edge UE ID, the EEC/UE may need to provide the IP address of the EEC/UE to the edge server. The edge server may send the IP address to a NEF (network exposure function) to obtain an AF (application function)-specific terminal identifier (UE ID), and set the received AF-specific UE ID as the edge UE ID.

For a malicious UE/EEC that intends to obtain services on behalf of another UE, the malicious UE/ECC may provide a fake IP address to the edge server to impersonate the other UE/EEC. However, there is currently a lack of mechanisms on IP address verification for edge computing scenarios.

### SUMMARY

Embodiments of the present disclosure provides a method of IP address verification for an edge computing scenario and an apparatus thereof, capable of solving a problem of lack of effective means to verify an IP address provided by a terminal in the edge computing scenario, and improving communication security of the edge computing scenario.

In a first aspect, a method of IP address verification for an edge computing scenario is provided according to an embodiment of the present disclosure. The method is performed by a binding support function (BSF) and includes:
acquiring an IP address to be verified and first verification information of the IP address to be verified provided by a terminal; and
determining whether the IP address to be verified is a real IP address of the terminal according to the IP address to be verified and/or the first verification information.

In this technical solution, the BSF determines whether the IP address to be verified is the real IP address of the terminal according to the IP address to be verified and/or the first verification information provided by the terminal, which may solve a problem of lack of effective means to verify an IP address provided by a terminal in the edge computing scenario, and improve communication security of the edge computing scenario.

In a second aspect, a method of IP address verification for an edge computing scenario is provided according to an embodiment of the present disclosure. The method is performed by a terminal and includes:
sending an IP address to be verified and first verification information of the IP address to be verified to a first edge server or a second edge server, to send the IP address to be verified and the first verification information to the BSF via the edge server, such as the first edge server or the second edge server, and a NEF;
in which the first verification information is used for a BSF to determine whether the IP address to be verified is a real IP address of the terminal.

In this technical solution, the terminal sends the IP address to be verified and the first verification information to the edge server, to send the IP address to be verified and the first verification information to the BSF via the edge server and the NEF, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

In a third aspect, a method of IP address verification for an edge computing scenario is provided according to an embodiment of the present disclosure. The method is performed by a first edge server and includes:
receiving an IP address to be verified and first verification information of the IP address to be verified sent by a terminal;
sending the IP address to be verified and the first verification information;
in which the first verification information is used for a BSF to determine whether the IP address to be verified is a real IP address of the terminal.

In this technical solution, the first edge server receives the IP address to be verified and the first verification information sent by the terminal, and sends the IP address to be verified and the first verification information, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

In a fourth aspect, a method of IP address verification for an edge computing scenario is provided according to an embodiment of the present disclosure. The method is performed by a second edge server and includes:
acquiring an IP address to be verified and first verification information of the IP address to be verified provided by a terminal; and
sending the IP address to be verified and the first verification information to a NEF;
in which the first verification information is used for a BSF to determine whether the IP address to be verified is a real IP address of the terminal.

In this technical solution, the second edge server acquires the IP address to be verified and the first verification information provided by the terminal, and sends the IP address to be verified and the first verification information to the NEF, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

In a fifth aspect, a method of IP address verification for an edge computing scenario is provided according to an embodiment of the present disclosure. The method is performed by a network exposure function (NEF) and includes:
acquiring an IP address to be verified and first verification information of the IP address to be verified provided by a terminal;
sending the IP address to be verified and/or the first verification information to a BSF;
in which the first verification information is used for the BSF to determine whether the IP address to be verified is a real IP address.

In this technical solution, the NEF acquires the IP address to be verified and the first verification information provided by the terminal, and sends the IP address to be verified and the first verification information to the BSF, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

In a sixth aspect, a system of IP address verification for an edge computing scenario is provided according to an embodiment of the present disclosure. The system includes: a BSF, a terminal, a first edge server, and a NEF. The BSF is configured to implement the method described in the first aspect above; the terminal is configured to implement the method described in the second aspect above; the first edge server is configured to implement the method described in the third aspect above; and the NEF is configured to implement the method described in the fifth aspect above.

In a seventh aspect, a system of IP address verification for an edge computing scenario is provided according to an embodiment of the present disclosure. The system includes: a BSF, a terminal, a first edge server, a second edge server, and a NEF. The BSF is configured to implement the method described in the first aspect above; the terminal is configured to implement the method described in the second aspect above; the first edge server is configured to implement the method described in the third aspect above; the second edge server is configured to implement the method described in the fourth aspect above; and the NEF is configured to implement the method described in the fifth aspect above.

In an eighth aspect, a system of IP address verification for an edge computing scenario is provided according to an embodiment of the present disclosure. The system includes: a BSF, a terminal, a second edge server, and a NEF. The BSF is configured to implement the method described in the first aspect above; the terminal is configured to implement the method described in the second aspect above; the second edge server is configured to implement the method described in the fourth aspect above; and the NEF is configured to implement the method described in the fifth aspect above.

In a ninth aspect, a communication device is provided according to an embodiment of the present disclosure. The communication device includes:
a processing module, configured to acquire an IP address to be verified and first verification information of the IP address to be verified provided by a terminal; and
the processing module further configured to determine whether the IP address to be verified is a real IP address of the terminal according to the IP address to be verified and/or the first verification information.

In a tenth aspect, a communication device is provided according to an embodiment of the present disclosure. The communication device includes:
a transceiver module, configured to send an IP address to be verified and first verification information of the IP address to be verified to a first edge server or a second edge server, to send the IP address to be verified and the first verification information to the BSF via the edge server, such as the first edge server or the second edge server, and a NEF;
in which the first verification information is used for a BSF to determine whether the IP address to be verified is a real IP address of the terminal.

In an eleventh aspect, a communication device is provided according to an embodiment of the present disclosure. The communication device includes:
a transceiver module, configured to receive an IP address to be verified and first verification information of the IP address to be verified sent by a terminal;
the transceiver module further configured to send the IP address to be verified and the first verification information;
in which the first verification information is used for a BSF to determine whether the IP address to be verified is a real IP address of the terminal.

In a twelfth aspect, a communication device is provided according to an embodiment of the present disclosure. The communication device includes:
a processing module, configured to acquire an IP address to be verified and first verification information of the IP address to be verified provided by a terminal; and
a transceiver module, configured to send the IP address to be verified and the first verification information to a NEF;
in which the first verification information is used for a BSF to determine whether the IP address to be verified is a real IP address of the terminal.

In a thirteenth aspect, a communication device is provided according to an embodiment of the present disclosure. The communication device includes:
a processing module, configured to acquire an IP address to be verified and first verification information of the IP address to be verified provided by a terminal;
a transceiver module, configured to send the IP address to be verified and/or the first verification information to a BSF;
in which the first verification information is used for the BSF to determine whether the IP address to be verified is a real IP address.

In a fourteenth aspect, a communication device including a processor is provided according to embodiments of the disclosure. When the processor calls a computer program in a memory, the method according to the first aspect is performed.

In a fifteenth aspect, a communication device including a processor is provided according to embodiments of the disclosure. When the processor calls a computer program in a memory, the method according to the second aspect is performed.

In a sixteenth aspect, a communication device including a processor is provided according to embodiments of the disclosure. When the processor calls a computer program in a memory, the method according to the third aspect is performed.

In a seventeenth aspect, a communication device including a processor is provided according to embodiments of the disclosure. When the processor calls a computer program in a memory, the method according to the fourth aspect is performed.

In an eighteenth aspect, a communication device including a processor is provided according to embodiments of the disclosure. When the processor calls a computer program in a memory, the method according to the fifth aspect is performed.

In a nineteenth aspect, a communication device including a processor and a memory storing a computer program is provided according to embodiments of the disclosure. The processor is configured to execute the computer program stored on the memory, causing the communication device to perform the method according to the first aspect.

In a twentieth aspect, a communication device including a processor and a memory storing a computer program is provided according to embodiments of the disclosure. The processor is configured to execute the computer program stored on the memory, causing the communication device to perform the method according to the second aspect.

In a twenty-first aspect, a communication device including a processor and a memory storing a computer program is provided according to embodiments of the disclosure. The processor is configured to execute the computer program stored on the memory, causing the communication device to perform the method according to the third aspect.

In a twenty-second aspect, a communication device including a processor and a memory storing a computer program is provided according to embodiments of the disclosure. The processor is configured to execute the computer program stored on the memory, causing the communication device to perform the method according to the fourth aspect.

In a twenty-third aspect, a communication device including a processor and a memory storing a computer program is provided according to embodiments of the disclosure. The processor is configured to execute the computer program stored on the memory, causing the communication device to perform the method according to the fifth aspect.

In a twenty-fourth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above first aspect.

In a twenty-fifth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above second aspect.

In a twenty-sixth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above third aspect.

In a twenty-seventh aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above fourth aspect.

In a twenty-eighth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above fifth aspect.

In a twenty-ninth aspect, a system of IP address verification for an edge computing scenario is provided according to an embodiment of the present disclosure. The system includes the communication device described in the ninth aspect, the communication device described in the tenth aspect, the communication device described in the eleventh aspect, and the communication device described in the thirteenth aspect, or the system includes the communication device described in the ninth aspect, the communication device described in the tenth aspect, the communication device described in the twelfth aspect, and the communication device described in the thirteenth aspect, or the system includes the communication device described in the ninth aspect, the communication device described in the tenth aspect, the communication device described in the eleventh aspect, the communication device described in the twelfth aspect, and the communication device described in the thirteenth aspect, or the system includes the communication device described in the fourteenth aspect, the communication device described in the fifteenth aspect, the communication device described in the sixteenth aspect, and the communication device described in the eighteenth aspect, or the system includes the communication device described in the fourteenth aspect, the communication device described in the fifteenth aspect, the communication device described in the seventeenth aspect, and the communication device described in the eighteenth aspect, or the system includes the communication device described in the fourteenth aspect, the communication device described in the fifteenth aspect, the communication device described in the sixteenth aspect, the communication device described in the seventeenth aspect, and the communication device described in the eighteenth aspect, or the system includes the communication device described in the nineteenth aspect, the communication device described in the twentieth aspect, the communication device described in the twenty-first aspect, and the communication device described in the twenty-third aspect, or the system includes the communication device described in the nineteenth aspect, the communication device described in the twentieth aspect, the communication device described in the twenty-second aspect, and the communication device described in the twenty-third aspect, or the system includes the communication device described in the nineteenth aspect, the communication device described in the twentieth aspect, the communication device described in the twenty-first aspect, the communication device described in the twenty-second aspect, and the communication device described in the twenty-third aspect, or the system includes the communication device described in the twenty-fourth aspect, the communication device described in the twenty-fifth aspect, the communication device described in the twenty-sixth aspect, and the communication device described in the twenty-eighth aspect, or the system includes the communication device described in the twenty-fourth aspect, the communication device described in the twenty-fifth aspect, the communication device described in the twenty-seventh aspect, and the communication device described in the twenty-eighth aspect, or the system includes the communication device described in the twenty-fourth aspect, the communication device described in the twenty-fifth aspect, the communication device described in the twenty-sixth aspect, the communication device described in the twenty-seventh aspect, and the communication device described in the twenty-eighth aspect.

In a thirtieth aspect, a computer-readable storage medium is provided according to embodiments of the present disclosure. The computer-readable storage medium is configured to store instructions used for the above BSF. When the instructions are executed, the method as described in the first aspect is implemented by the above BSF.

In a thirty-first aspect, a computer-readable storage medium is provided according to embodiments of the present disclosure. The computer-readable storage medium is configured to store instructions used for the above terminal. When the instructions are executed, the method as described in the second aspect is implemented by the above terminal.

In a thirty-second aspect, a computer-readable storage medium is provided according to embodiments of the present disclosure. The computer-readable storage medium is configured to store instructions used for the above first edge server. When the instructions are executed, the method as described in the fifth aspect is implemented by the above first edge server.

In a thirty-third aspect, a computer-readable storage medium is provided according to embodiments of the present disclosure. The computer-readable storage medium is configured to store instructions used for the above second edge server. When the instructions are executed, the method as described in the sixth aspect is implemented by the above second edge server.

In a thirty-fourth aspect, a computer-readable storage medium is provided according to embodiments of the present disclosure. The computer-readable storage medium is configured to store instructions used for the above NEF. When the instructions are executed, the method as described in the sixth aspect is implemented by the above NEF.

In a thirty-fifth aspect, a computer program product including a computer program is further provided in the present disclosure. The computer program runs on a computer, causing the computer to perform the method according to the first aspect.

In a thirty-sixth aspect, a computer program product including a computer program is further provided in the present disclosure. The computer program runs on a computer, causing the computer to perform the method according to the second aspect.

In a thirty-seventh aspect, a computer program product including a computer program is further provided in the present disclosure. The computer program runs on a computer, causing the computer to perform the method according to the third aspect.

In a thirty-eighth aspect, a computer program product including a computer program is further provided in the present disclosure. The computer program runs on a computer, causing the computer to perform the method according to the fourth aspect.

In a thirty-ninth aspect, a computer program product including a computer program is further provided in the present disclosure. The computer program runs on a computer, causing the computer to perform the method according to the fifth aspect.

In a fortieth aspect, a chip system is further provided in the present disclosure. The chip system includes at least one processor and at least one interface for supporting the BSF in realizing the functions involved in the method described in the first aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a forty-first aspect, a chip system is further provided in the present disclosure. The chip system includes at least one processor and at least one interface for supporting the terminal in realizing the functions involved in the method described in the second aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a forty-second aspect, a chip system is further provided in the present disclosure. The chip system includes at least one processor and at least one interface for supporting the first edge server in realizing the functions involved in the method described in the third aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a forty-third aspect, a chip system is further provided in the present disclosure. The chip system includes at least one processor and at least one interface for supporting the second edge server in realizing the functions involved in the method described in the fourth aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a forty-fourth aspect, a chip system is further provided in the present disclosure. The chip system includes at least one processor and at least one interface for supporting the NEF in realizing the functions involved in the method described in the fifth aspect above, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a forty-fifth aspect, a computer program is provided in the present disclosure. The computer program runs on a computer, causing the computer to perform the method according to the first aspect.

In a forty-sixth aspect, a computer program is provided in the present disclosure. The computer program runs on a computer, causing the computer to perform the method according to the second aspect.

In a forty-seventh aspect, a computer program is provided in the present disclosure. The computer program runs on a computer, causing the computer to perform the method according to the third aspect.

In a forty-eighth aspect, a computer program is provided in the present disclosure. The computer program runs on a computer, causing the computer to perform the method according to the fourth aspect.

In a forty-ninth aspect, a computer program is provided in the present disclosure. The computer program runs on a computer, causing the computer to perform the method according to the fifth aspect.

In a fiftieth aspect, a method of IP address verification for an edge computing scenario is provided in the present disclosure. The method is performed by a core network device including a BSF and a NEF, and the method comprising:
the NEF acquiring an IP address to be verified and first verification information of the IP address to be verified provided by a terminal;
the NEF sending the IP address to be verified and/or the first verification information to the BSF; and
the BSF determining whether the IP address to be verified is a real IP address of the terminal according to the IP address to be verified and/or the first verification information.

In the fifty-first aspect, a core network device is provided in the present disclosure. The core network device includes a BSF and a NEF, and the NEF is configured to implement the method described in the fifth aspect above; and the BSF is configured to implement the method described in the first aspect above.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a schematic diagram illustrating an architecture of a communication system according to an embodiment of the present disclosure.
FIG. 2 is a schematic diagram illustrating an architecture of a communication system according to an embodiment of the present disclosure.
FIG. 3 is a schematic diagram illustrating an architecture of a communication system according to an embodiment of the present disclosure.
FIG. 4 is a flowchart illustrating an edge UE ID request procedure according to an embodiment of the present disclosure.
FIG. 5a is a flowchart illustrating a method of IP address verification for an edge computing scenario according to an embodiment of the present disclosure.
FIG. 5b is a flowchart illustrating a method of IP address verification for an edge computing scenario according to an embodiment of the present disclosure.
FIG. 5c is a flowchart illustrating a method of IP address verification for an edge computing scenario according to an embodiment of the present disclosure.
FIG. 6a is a flowchart illustrating a method of IP address verification for an edge computing scenario according to an embodiment of the present disclosure.
FIG. 6b is a flowchart illustrating a method of IP address verification for an edge computing scenario according to an embodiment of the present disclosure.
FIG. 6c is a flowchart illustrating a method of IP address verification for an edge computing scenario according to an embodiment of the present disclosure.
FIG. 7a is a flowchart illustrating a method of IP address verification for an edge computing scenario according to an embodiment of the present disclosure.
FIG. 7b is a flowchart illustrating a method of IP address verification for an edge computing scenario according to an embodiment of the present disclosure.
FIG. 7c is a flowchart illustrating a method of IP address verification for an edge computing scenario according to an embodiment of the present disclosure.
FIG. 8 is a flowchart illustrating a method of IP address verification for an edge computing scenario according to an embodiment of the present disclosure.
FIG. 9 is a flowchart illustrating a method of IP address verification for an edge computing scenario according to an embodiment of the present disclosure.
FIG. 10 is a flowchart illustrating a method of IP address verification for an edge computing scenario according to an embodiment of the present disclosure.
FIG. 11 is a flowchart illustrating a method of IP address verification for an edge computing scenario according to an embodiment of the present disclosure.
FIG. 12 is a flowchart illustrating a method of IP address verification for an edge computing scenario according to an embodiment of the present disclosure.
FIG. 13 is a flowchart illustrating an interaction of a communication system according to an embodiment of the present disclosure.
FIG. 14 is a flowchart illustrating an interaction of a communication system according to an embodiment of the present disclosure.
FIG. 15 is a flowchart illustrating a method of IP address verification for an edge computing scenario according to an embodiment of the present disclosure.
FIG. 16 is a flowchart illustrating a method of IP address verification for an edge computing scenario according to an embodiment of the present disclosure.
FIG. 17 is a flowchart illustrating a method of IP address verification for an edge computing scenario according to an embodiment of the present disclosure.
FIG. 18 is a flowchart illustrating a method of IP address verification for an edge computing scenario according to an embodiment of the present disclosure.
FIG. 19 is a schematic diagram illustrating a structure of a communication device according to an embodiment of the present disclosure.
FIG. 20 is a schematic diagram illustrating a structure of a communication device according to an embodiment of the present disclosure.
FIG. 21 is a schematic diagram illustrating a structure of a chip according to an embodiment of the present disclosure.

### DETAILED DESCRIPTION

Embodiments of the present disclosure are described in detail below, examples of which are shown in the drawings, wherein the same or similar reference numerals denote the same or similar elements or elements having the same or similar functions throughout. The embodiments described below by referring to the figures are exemplary, and are intended to explain the present disclosure, and should not be construed as limiting the present disclosure. Among them, in the description of this disclosure, unless otherwise specified, "/" means or means, for example, A/B can mean A or B; "and/or" in this paper is only a kind of association describing associated objects A relationship means that there may be three kinds of relationships, for example, A and/or B means that: A exists alone, A and B exist simultaneously, and B exists alone.

The terms used in the embodiments of the present disclosure are only for the purpose of describing specific embodiments, and are not intended to limit the embodiments of the present disclosure. The singular forms "a" and "the" used in the embodiments of this disclosure and the appended claims are also intended to include plural forms unless the context clearly indicates otherwise.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "in case of", "if" as used herein may be interpreted as "upon" or "when" or "in response to determining".

It should be noted that the method provided in any embodiment of the present disclosure is executed alone, or is executed in combination with possible implementations in other embodiments, and is also executed in combination with any technical solution in the related arts.

The embodiments of the present disclosure are described below. Examples of the embodiments are shown in the accompanying drawing, in which the constant same or similar labels indicate the same or similar elements. Embodiments described herein with reference to drawings are explanatory, serve to explain the disclosure, and are not construed to limit embodiments of the disclosure.

In order to better understand a method of IP address verification for an edge computing scenario described in an embodiment of the present disclosure, a communication system to which the embodiment of the present disclosure is applicable is first described below.

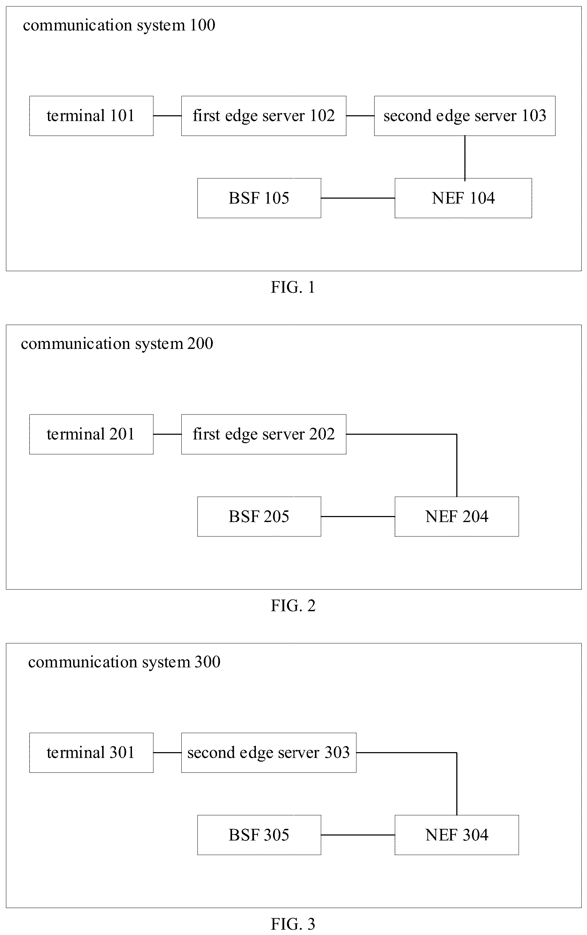

Please refer to FIG. 1, FIG. 1 is a schematic diagram illustrating an architecture of a communication system according to an embodiment of the present disclosure. The communication system may include, but is not limited to, a terminal, a first edge server, a second edge server, a NEF (network exposure function) and a BSF (bootstrapping server function). A number and a form of devices as shown in FIG. 1 are only for example and do not constitute a limitation of embodiments of the present disclosure. In actual disclosures, the communication system may include two or more terminals, two or more first edge servers, two or more second edge servers, two or more NEFs, and two or more BSFs. The communication system 100 as illustrated in FIG. 1 may include a terminal 101, a first edge server 102, a second edge server 103, a NEF 104 and a BSF 105 as an example. It is noted that the communication system described in the embodiment of the present disclosure is to more clearly illustrate the technical solution of the embodiment of the present disclosure, and does not constitute a limitation on the technical solution provided in the embodiment of the present disclosure. It is known to those skilled in the art that with evolution of the system architecture and emergence of new service scenarios, the technical solution provided in the embodiment of the present disclosure is also applicable to similar technical problems.

It needs to be noted that the technical solution in embodiments of the present disclosure is applicable for various communication systems, for example, a long term evolution (LTE) system, a 5th generation (5G) mobile communication system, a 5G new radio (NR) system, or other future new mobile communication systems, etc.

The terminal 101 in embodiments of the disclosure is an entity for receiving or transmitting a signal at a user side, and for example, a mobile phone. The terminal may be referred to as a terminal device, a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology and a specific device form adopted by the terminal are not limited in embodiments of the present disclosure.

In some embodiments, the first edge server 102 is, for example, an edge application server (EAS).

In some embodiments, the second edge server 103 is, for example, an edge enabler server (EES). The EAS is assisted by an EES collocated with the EAS in an edge data network (EDN). The assistance provided by the EES includes monitoring user equipment (UE), providing the EAS with exposure functions of the core network, assisting application context relocation, and the like. The EAS may use a service interface (API) disclosed by the EES to enable the EAS to access the 3GPP network capability exposure function. The application consumer of the EAS is called as an application client (AC), which resides on the UE and is assisted by an edge enabler client (EEC) on the UE. A plurality of EASs for the same application may be accessible on various EDNs at any time point, so as to be ready to provide services to the UE. An edge configuration server (ECS) and the EES assist the UE in finding these EASs. With the help of the AC, the EEC then selects one of available EASs and facilitates establishment of communication between the AC and the selected EAS.

In some embodiments, the NEF 104 is, for example, a core network element that performs the fifth generation mobile communication technology (5th-Generation, 5G) network capability exposure, and the main function of NEF 104 is to realize the exposure of network capabilities and network events. In the 5G core network, each network element may publish functions and events to an application function (AF) or other network functions (NF) through the NEF, and the NEF exposes the network capabilities to the AF for calling through a general application programming interface (API).

In some embodiments, the BSF 105 is configured to perform mutual identity authentication with the UE when performing a bootstrapping procedure.

Please refer to FIG. 2, FIG. 2 is a schematic diagram illustrating an architecture of a communication system according to an embodiment of the present disclosure. The communication system may include, but is not limited to, a terminal, a first edge server, an NEF and a BSF. A number and a form of devices as shown in FIG. 2 are only for example and do not constitute a limitation of embodiments of the present disclosure. In actual disclosures, the communication system may include two or more terminals, two or more first edge servers, two or more NEFs, and two or more BSFs. The communication system 200 as illustrated in FIG. 2 may include a terminal 201, a first edge server 202, a NEF 204 and a BSF 205 as an example. It is noted that the communication system described in the embodiment of the present disclosure is to more clearly illustrate the technical solution of the embodiment of the present disclosure, and does not constitute a limitation on the technical solution provided in the embodiment of the present disclosure. It is known to those skilled in the art that with evolution of the system architecture and emergence of new service scenarios, the technical solution provided in the embodiment of the present disclosure is also applicable to similar technical problems.

It needs to be noted that the technical solution in embodiments of the present disclosure is applicable for various communication systems, for example, a long term evolution (LTE) system, a 5th generation (5G) mobile communication system, a 5G new radio (NR) system, or other future new mobile communication systems, etc. For description of the terminal 201, the first edge server 202, the NEF 204 and the BSF 205, reference may be made to the description of the terminal, the first edge server, the NEF and the BSF shown in FIG. 1 above, and details may not be repeated here.

Please refer to FIG. 3, FIG. 3 is a schematic diagram illustrating an architecture of a communication system according to an embodiment of the present disclosure. The communication system may include, but is not limited to, a terminal, a second edge server, an NEF and a BSF. A number and a form of devices as shown in FIG. 3 are only for example and do not constitute a limitation of embodiments of the present disclosure. In actual disclosures, the communication system may include two or more terminals, two or more second edge servers, two or more NEFs, and two or more BSFs. The communication system 300 as illustrated in FIG. 3 may include a terminal 301, a second edge server 303, a NEF 304 and a BSF 305 as an example. It is noted that the communication system described in the embodiment of the present disclosure is to more clearly illustrate the technical solution of the embodiment of the present disclosure, and does not constitute a limitation on the technical solution provided in the embodiment of the present disclosure. It is known to those skilled in the art that with evolution of the system architecture and emergence of new service scenarios, the technical solution provided in the embodiment of the present disclosure is also applicable to similar technical problems.

It needs to be noted that the technical solution in embodiments of the present disclosure is applicable for various communication systems, for example, a long term evolution (LTE) system, a 5th generation (5G) mobile communication system, a 5G new radio (NR) system, or other future new mobile communication systems, etc. For description of the terminal 301, the second edge server 303, the NEF 304 and the BSF 305, reference may be made to the description of the terminal, the second edge server, the NEF and the BSF shown in FIG. 1 above, and details may not be repeated here.

In the edge computing scenario, the edge server may obtain the IP address of the EEC/UE in the edge computing scenario. However, it is cumbersome to distinguish the EEC/UE by the IP address. To this end, the edge server may provide the EEC/UE with an edge UE ID so that the edge UE ID may be used to determine whether a specific service may be provided to a specific UE. In the 5G system, the 5G core network may assign an IP address to each EEC/UE. In order to obtain the edge UE ID, the EEC/UE may need to provide the IP address of the EEC/UE to the EES. For an EAS, in order to obtain the edge UE ID associated with the specific UE (such as the above EEC/UE), the EAS may need to first obtain the IP address from the UE/EEC, and then the EAS may obtain the edge UE ID by sending a newly received IP address to the EES. The EES may send the IP address to the NEF to obtain an AF (Application function)-specific UE ID, and set the received AF-specific UE ID as the edge UE ID. In this way, the EES may obtain the edge UE ID of the UE/EEC, so as to use the edge UE ID (Edge UE ID) to determine whether the specific service may be provided to the UE/EEC.

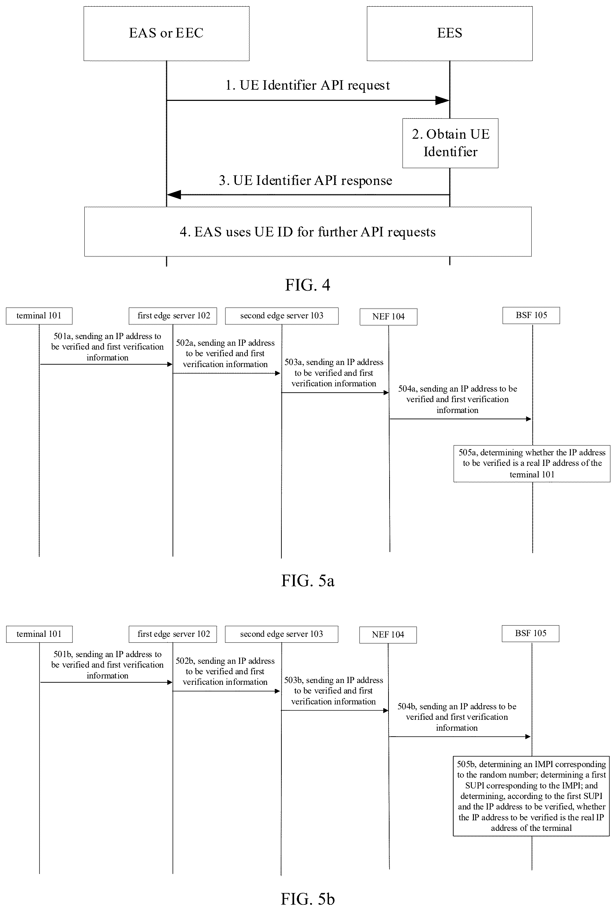

For example, as shown in FIG. 4, the EAS/EEC may provide an API request for the edge UE ID to the EES, and the request carries an IP address provided by a target EEC/UE. Upon receiving the API request, the EES may send the IP address to the NEF to obtain the AF-specific UE ID. The EES may set the AF-specific UE ID as the edge UE ID and send the edge UE ID to the EAS/EEC via an API response of the UE ID. The EAS may use the edge UE ID to make the further API request.

For a malicious UE/EEC that intends to obtain services on behalf of another UE, the malicious UE/ECC may provide a fake IP address to the EES/EAS to impersonate the other UE/EEC. For example, using the assigned edge UE ID, the malicious UE may obtain location information of a victim UE/EEC. However, the present EES/EAS lacks a mechanism to verify the IP address, resulting in a problem of insecure communication in the edge computing scenario.

To this end, embodiments of the present disclosure provide a method of IP address verification for an edge computing scenario and an apparatus thereof, capable of solving a problem of lack of effective means to verify an IP address provided by a terminal in the edge computing scenario, and improving communication security of the edge computing scenario. The method of IP address verification for an edge computing scenario and the apparatus thereof provided by the present disclosure are described in detail below in combination with the accompanying drawings.

Please refer to FIG. 5a, FIG. 5a is a flowchart illustrating a method of IP address verification for an edge computing scenario according to an embodiment of the present disclosure. It is noted that the method may be used in a communication system 100, as shown in FIG. 5a, and the method may include but is not limited to the following steps.

In step 501a, a terminal 101 sends an IP address to be verified and first verification information of the IP address to be verified to a first edge server 102.

In some embodiments, the terminal 101 is, for example, a user equipment (UE). Alternatively, the terminal 101 may also be an EEC (edge enabler client) on the terminal 101, for example, the terminal 101 may be an EEC on the UE. Alternatively, the EEC running on the terminal 101 sends the IP address to be verified and the first verification information of the IP address to be verified through the terminal 101.

In one implementation, the IP address to be verified and the first verification information may be carried in an API request. For example, the terminal 101 may send a first API request to the first edge server 102, and the API request may carry the IP address to be verified, and may also carry the first verification information of the IP address to be verified. As an example, the first API request may be an edge UE ID API request, or may be other API requests, which is not limited in the disclosure and may not be described in detail.

It is noted that the IP address to be verified is an IP address provided by the terminal. In some embodiments, the IP address to be verified may be a real IP address of the terminal 101, or the IP address to be verified may also be a false IP address, such as an IP address fabricated by the terminal 101, or may also be a forged IP address of another terminal 101. To this end, the embodiment of the present disclosure uses the first verification information to determine whether the IP address to be verified is the real IP address of the terminal 101. The real IP address may be an IP address assigned by a core network to the terminal 101.

In some embodiments, the first verification information may be generated by the terminal 101 based on the IP address to be verified and a SUPI (subscription permanent identifier). In some embodiments, the terminal 101 is pre-configured with the SUPI, and a most common format of the SUPI is IMSI (international mobile subscriber identity), and the format of the SUPI may be also a format of NAI (network access identifier) for non-3GPP (3rd generation partnership project) access.

In a possible implementation, the terminal 101 performs hash processing on the IP address to be verified and the SUPI to obtain the first verification information of the IP address to be verified. In an example, the terminal 101 may use a hash algorithm to process the IP address to be verified and the SUPI, and determine the obtained value as the first verification information.

In another possible implementation, the terminal 101 uses a KDF (key derivation function) to derive the first verification information of the IP address to be verified based on the IP address to be verified and the SUPI. In an example, the terminal 101 may use the IP address to be verified and the SUPI as inputs of the KDF, input the IP address to be verified and the SUPI into the KDF, and determine a value derived from the KDF as the first verification information of the IP address to be verified.

In some embodiments, the first verification information may include a random number, the random number is obtained from a BSF (binding support function) 105 after the terminal 101 completes authentication with the BSF 105 using a GBA (generic bootstrapping architecture) authentication service. For example, if the terminal 101 desires to use the GBA authentication service, the terminal 101 first requests mutual authentication with the BSF 105. After the authentication is completed, the BSF 105 sends the random number to the terminal 101, so that the terminal 101 may obtain the random number from the BSF 105. The terminal 101 determines the received random number as the first verification information of the IP address to be verified.

In some embodiments, the first verification information may include an AKMA (authentication and key management for applications) key identifier (A-KID). The A-KID is generated when the terminal 101 accesses the network. For example, when the terminal 101 accesses the network, the terminal 101 generates the A-KID, and the terminal 101 may determine the A-KID as the first verification information of the IP address to be verified.

In step 502a, the first edge server 102 receives the IP address to be verified and the first verification information sent by the terminal 101, and sends the IP address to be verified and the first verification information to the second edge server 103.

In step 503a, the second edge server 103 sends the received IP address to be verified and the first verification information to a NEF 104.

In step 504a, the NEF 104 sends the received IP address to be verified and the first verification information to the BSF 105.

In an implementation, the first verification information may be generated by the terminal 101 based on the IP address to be verified and the SUPI. In this embodiment, the NEF 104 may directly send the received IP address to be verified and the first verification information to the BSF 105.

In step 505a, the BSF 105 determines whether the IP address to be verified is a real IP address of the terminal 101 according to the received IP address to be verified and the first verification information.

In an implementation, in the 5GS, the 5GC may allocate an IP address to the terminal 101. Before step 501a, after obtaining the IP address and the SUPI corresponding to the IP address, the BSF 105 may bind the IP address and the SUPI corresponding to the IP address to establish a mapping relationship between the IP address and the SUPI.

In an embodiment of the present disclosure, the BSF 105 includes a mapping relationship between at least one IP address and at least one SUPI, and one IP address corresponds to one SUPI. The BSF 105 may generate a plurality of pieces of verification information according to the IP address and the corresponding SUPI in the mapping relationship, and one IP address corresponds to one SUPI and one piece of verification information, or one IP address corresponds to one SUPI, and one IP address corresponds to one piece of verification information.

It should be noted that BSF 105 uses the verification information generated by itself and the received first verification information to determine whether the IP address to be verified is the real IP address of the terminal 101. Alternatively, BSF 105 may also use its own IP address and the received IP address to be verified to determine whether the IP address to be verified is the real IP address of the terminal 101. For example, the BSF 105 may implement the solution of determining whether the IP address to be verified is the real IP address of the terminal 101 by using any of the following methods.

Method 1: the BSF 105 may determine second verification information according to the IP address to be verified, and the BSF 105 determines whether the first verification information is the same as the second verification information. In a case where the first verification information is the same as the second verification information, the BSF 105 determines that the IP address to be verified is the real IP address of the terminal 101. As an example, the BSF 105 may acquire the second verification information corresponding to the IP address to be verified from a plurality of pieces of verification information; in which one IP address corresponds to one piece of verification information, and the plurality of pieces of verification information are generated by the BSF based on IP addresses and SUPIs corresponding to the IP addresses respectively.

In an example, the BSF 105 may determine the second verification information corresponding to the IP address to be verified from the plurality of pieces of verification information. The BSF 105 compares the second verification information with the first verification information received from the NEF 104. In a case where the first verification information is the same (or consistent) as the second verification information, the BSF 105 may determine that the IP address to be verified is the real IP address of the terminal 101. In an example, in a case where the BSF 105 determines that the first verification information is not the same (or inconsistent) as the second verification information, then the BSF 105 determines that the IP address to be verified is a non-real IP address of the terminal 101.

Method 2: the BSF 105 acquires a first IP address corresponding to the first verification information from a plurality of pieces of verification information, in which one IP address corresponds to one piece of verification information, and the plurality of pieces of verification information are generated by the BSF 105 based on IP addresses and SUPIs corresponding to the IP addresses respectively. The BSF 105 determines whether the first IP address is the same as the IP address to be verified. In a case where the first IP address is the same as the IP address to be verified, the BSF 105determines that the IP address to be verified is the real IP address of the terminal 101. In an example, in a case where the BSF 105 determines that the first IP address is not the same as (or inconsistent with) the IP address to be verified, the BSF 105 determines that the IP address to be verified is a non-real IP address of the terminal 101.

In an example, BSF 105 acquires the first IP address corresponding to the first verification information from the plurality of pieces of verification information, and compares the first IP address with the IP address to be verified received from the NEF 104. In a case where the first IP address is the same (or consistent) as the IP address to be verified, the BSF 105 may determine that the IP address to be verified is the real IP address of the terminal 101.

It is noted that the above methods 1 and 2 are only examples given to facilitate those skilled in the art to understand the implementation of "the BSF determines whether the IP address to be verified is the real IP address of the terminal", that is, other means may also be used to implement the solution of "the BSF determines whether the IP address to be verified is the real IP address of the terminal", and the disclosure does not limit this and details are not repeated herein. The above methods 1 and 2 may be implemented in any combination with the steps in any embodiment of the present disclosure.

It should also be noted that the plurality of pieces of verification information may be pre-generated by the BSF 105. The BSF 105 may generate the plurality of pieces of verification information in any of the following manners.

In a possible implementation, for each IP address among the IP addresses, the BSF 105 performs hash processing on the each IP address and a SUPI corresponding to the each IP address, to obtain verification information of the each IP address.

In an example, for each IP address, the BSF 105 may perform the hash processing on the each IP address and the SUPI corresponding to the each IP address, and determine the obtained value as the verification information of the IP address, so that the pieces of verification information corresponding to respective IP addresses are integrated to obtain the plurality of pieces of verification information.

In another possible implementation manner: for each IP address among the IP addresses, the BSF 105 derives, according to each IP address and a SUPI corresponding to the each IP address, verification information of the each IP address by using a KDF.

In an example, for each IP address, the BSF 105 takes the each IP address and the SUPI corresponding to the each IP address as inputs, and inputs the each IP address and the SUPI into the KDF. The value derived from the KDF is determined as the verification information of the each IP address. In this way, the pieces of verification information corresponding to respective IP addresses are integrated to obtain the plurality of pieces of verification information.

It is noted that the above-mentioned implementation for generating the plurality of pieces of verification information is only an example given to facilitate those skilled in the art to understand the implementation of "the BSF generates the plurality of pieces of verification information", that is, other means may also be used to implement the solution of generation the plurality of pieces of verification information, and this disclosure does not limit this and details are not repeated herein. The above-mentioned implementation for generating the plurality of pieces of verification information may be implemented in any combination with the steps in any embodiment of the disclosure.

In an example, in an embodiment of the present disclosure, in a case where the BSF 105 determines that the IP address to be verified is the real IP address of the terminal 101, the BSF 105 sends the SUPI corresponding to the IP address to be verified to the NEF 104. The NEF 104 receives the SUPI from the BSF 105, and the NEF 104 obtains an AF-specific UE ID from the UDM. The NEF 104 sends the AF-specific UE ID to the second edge server 103, and the second edge server 103 sets the AF-specific UE ID as the edge UE ID; or, the NEF 104 sends the AF-specific UE ID to the second edge server 103, and the second edge server 103 sends the AF-specific UE ID to the first edge server 102, and the first edge server 102 sets the AF-specific UE ID as the edge UE ID; or, the NEF 104 sends the AF-specific UE ID to the first edge server 102, and the first edge server 102 sets the AF-specific UE ID as the edge UE ID.

In an example, in an embodiment of the present disclosure, in a case where BSF 105 determines that the IP address to be verified is the not-real IP address of the terminal 101, an error message is sent to the NEF 104. That is, in a case where the BSF 105 determines that the IP address to be verified is not the real IP address of the terminal 101, the BSF 105 sends the error message to the NEF 104. In a case where the NEF 104 receives the error message from the BSF 105, the NEF 104 forwards the error message to the first edge server 102/second edge server 103. For example, the NEF 104 forwards the error message to the first edge server 102; or, the NEF 104 forwards the error message to the second edge server 103; or, the NEF 104 forwards the error message to the second edge server 103, and the second edge server 103 forwards the error message to the first edge server 102.

Please refer to FIG. 5b, FIG. 5b is a flowchart illustrating a method of IP address verification for an edge computing scenario according to an embodiment of the present disclosure. It is noted that the method may be used in a communication system 100, as shown in FIG. 5b, and the method may include but is not limited to the following steps.

In step 501b, a terminal 101 sends an IP address to be verified and first verification information of the IP address to be verified to a first edge server 102.

In the embodiment of the present disclosure, for an optional implementation of step 501b, reference may be made to an optional implementation of step 501a in FIG. 5a, and other related parts in the embodiment involved in FIG. 5a, and details are not repeated here.

In step 502b, the first edge server 102 receives the IP address to be verified and the first verification information sent by the terminal 101, and sends the IP address to be verified and the first verification information to the second edge server 103.

In the embodiment of the present disclosure, for an optional implementation of step 502b, reference may be made to an optional implementation of step 502a in FIG. 5a, and other related parts in the embodiment involved in FIG. 5a, and details are not repeated here.

In step 503b, the second edge server 103 sends the received IP address to be verified and the first verification information to a NEF 104.

In step 504b, the NEF 104 sends the received IP address to be verified and the first verification information to the BSF 105.

In an implementation, the first verification information may include a random number, the random number is obtained from the BSF 105 after the terminal 101 completes authentication with the BSF 105 using a GBA authentication service. In this embodiment, the NEF 104 may directly send the received IP address to be verified and the first verification information to the BSF 105.

In step 505b, the BSF 105 receives the IP address to be verified and the random number, determines an IP multimedia private identity (IMPI) corresponding to the random number, determines a first SUPI corresponding to the IMPI, and determines, according to the first SUPI and the IP address to be verified, whether the IP address to be verified is the real IP address of the terminal 101.

It is noted that the BSF 105 uses its own SUPI and the received first SUPI to determine whether the IP address to be verified is the real IP address of the terminal 101. Alternatively, the BSF 105 may also use its own IP address and the received IP address to be verified to determine whether the IP address to be verified is the real IP address of the terminal 101. For example, the BSF 105 may implement the solution of determining whether the IP address to be verified is the real IP address of the terminal 101 by using any of the following methods.

Method 1: the BSF 105 may determine, based on a correspondence between an IP address and a SUPI, a first IP address corresponding to the first SUPI, and compare the first IP address with the IP address to be verified to determine whether the first IP address is the same as the IP address to be verified. In a case where the first IP address is the same as the IP address to be verified, the BSF 105 may determine that the IP address to be verified is the real IP address of the terminal 101. In an example, in a case where the BSF 105 determines that the first IP address is not the same as the IP address to be verified, the BSF 105 may determine that the IP address to be verified is a non-real IP address of the terminal 101.

Method 2: the BSF 105 may determine, based on a correspondence between an IP address and a SUPI, a second SUPI corresponding to the IP address to be verified, and compare the second SUPI with the first SUPI received from the NEF 104 to determine whether the second SUPI is the same as the first SUPI. In a case where the BSF 105 determines that the first SUPI is the same as the second SUPI, the BSF 105 determines that the IP address to be verified is the real IP address of the terminal 101. In an example, in a case where the BSF 105 determines that the first SUPI is not the same as the second SUPI, the BSF 105 determines that the IP address to be verified is the non-real IP address of the terminal 101.

It is noted that the above methods 1 and 2 are only examples given to facilitate those skilled in the art to understand the implementation of "the BSF determines whether the IP address to be verified is the real IP address of the terminal", that is, other means may also be used to implement the solution of "the BSF determines whether the IP address to be verified is the real IP address of the terminal", and the disclosure does not limit this and details are not repeated herein. The above methods 1 and 2 may be implemented in any combination with the steps in any embodiment of the present disclosure.

In an example, in an embodiment of the present disclosure, in a case where the BSF 105 determines that the IP address to be verified is the real IP address of the terminal 101, the BSF 105 sends the SUPI corresponding to the IP address to be verified to the NEF 104. The NEF 104 receives the SUPI from the BSF 105, and the NEF 104 obtains an AF-specific UE ID from the UDM. The NEF 104 sends the AF-specific UE ID to the second edge server 103, and the second edge server 103 sets the AF-specific UE ID as the edge UE ID; or, the NEF 104 sends the AF-specific UE ID to the second edge server 103, and the second edge server 103 sends the AF-specific UE ID to the first edge server 102, and the first edge server 102 sets the AF-specific UE ID as the edge UE ID; or, the NEF 104 sends the AF-specific UE ID to the first edge server 102, and the first edge server 102 sets the AF-specific UE ID as the edge UE ID.

In an example, in an embodiment of the present disclosure, in a case where BSF 105 determines that the IP address to be verified is the not-real IP address of the terminal 101, an error message is sent to the NEF 104. That is, in a case where the BSF 105 determines that the IP address to be verified is not the real IP address of the terminal 101, the BSF 105 sends the error message to the NEF 104. In a case where the NEF 104 receives the error message from the BSF 105, the NEF 104 forwards the error message to the first edge server 102/second edge server 103. For example, the NEF 104 forwards the error message to the first edge server 102; or, the NEF 104 forwards the error message to the second edge server 103; or, the NEF 104 forwards the error message to the second edge server 103, and the second edge server 103 forwards the error message to the first edge server 102.

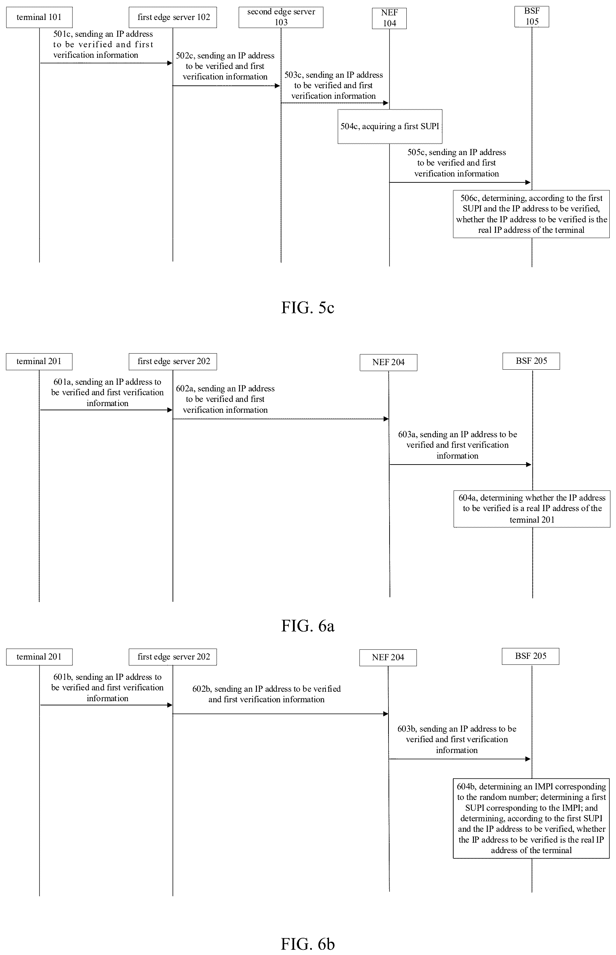

Please refer to FIG. 5c, FIG. 5c is a flowchart illustrating a method of IP address verification for an edge computing scenario according to an embodiment of the present disclosure. It is noted that the method may be used in a communication system 100, as shown in FIG. 5c, and the method may include but is not limited to the following steps.

In step 501c, a terminal 101 sends an IP address to be verified and first verification information of the IP address to be verified to a first edge server 102.

In the embodiment of the present disclosure, for an optional implementation of step 501c, reference may be made to an optional implementation of step 501a in FIG. 5a, and other related parts in the embodiment involved in FIG. 5a, and details are not repeated here.

In step 502c, the first edge server 102 receives the IP address to be verified and the first verification information sent by the terminal 101, and sends the IP address to be verified and the first verification information to the second edge server 103.

In the embodiment of the present disclosure, for an optional implementation of step 502c, reference may be made to an optional implementation of step 502a in FIG. 5a, and other related parts in the embodiment involved in FIG. 5a, and details are not repeated here.

In step 503c, the second edge server 103 sends the received IP address to be verified and the first verification information to a NEF 104.

In an implementation, the first verification information may include an A-KID.

In step 504c, the NEF 104 acquires a first SUPI from an AKMA anchor function (AAnF) based on the A-KID.

In an implementation, the AAnF includes a mapping relationship between at least one A-KID and at least one SUPI, and one A-KID corresponds to one SUPI. As an example, the NEF 104 may send an A-KID provided by the terminal 101 to the AAnF. Upon receiving the A-KID, the AAnF may find the SUPI corresponding to the A-KID based on the above mapping relationship, determine the SUPI corresponding to the A-KID as the first SUPI, and send the first SUPI to the NEF 104, so that the NEF 104 acquires the first SUPI from the AAnF.

In step 505c, the NEF 104 sends the received first SUPI and the IP address to be verified to the BSF 105.

The step of the NEF 104 acquiring the first SUPI and the step of the NEF 104 sending the IP address to be verified may be exchanged in order or performed simultaneously, and the step of the NEF 104 sending the IP address to be verified and the step of the NEF 104 sending the first SUPI may be exchanged in order or performed simultaneously. The present disclosure does not limit this and details are not repeated here.

In step 506c, the BSF 105 receives the first SUPI and the IP address to be verified, and determines whether the IP address to be verified is the real IP address of the terminal 101 according to the first SUPI and the IP address to be verified.

It is noted that the BSF 105 uses its own SUPI and the received first SUPI to determine whether the IP address to be verified is the real IP address of the terminal 101. Alternatively, the BSF 105 may also use its own IP address and the received IP address to be verified to determine whether the IP address to be verified is the real IP address of the terminal 101. For example, the BSF 105 may implement the solution of determining whether the IP address to be verified is the real IP address of the terminal 101 by using any of the following methods.

Method 1: the BSF 105 may determine, based on a correspondence between an IP address and a SUPI, a first IP address corresponding to the first SUPI, and compare the first IP address with the IP address to be verified to determine whether the first IP address is the same as the IP address to be verified. In a case where the first IP address is the same as the IP address to be verified, the BSF 105 may determine that the IP address to be verified is the real IP address of the terminal 101. In an example, in a case where the BSF 105 determines that the first IP address is not the same as (is inconsistent with) the IP address to be verified, the BSF 105 may determine that the IP address to be verified is a non-real IP address of the terminal 101.

Method 2: the BSF 105 may determine, based on a correspondence between an IP address and a SUPI, a second SUPI corresponding to the IP address to be verified, and compare the second SUPI with the first SUPI received from the NEF 104 to determine whether the second SUPI is the same as the first SUPI. In a case where the BSF 105 determines that the first SUPI is the same as the second SUPI, the BSF 105 determines that the IP address to be verified is the real IP address of the terminal 101. In an example, in a case where the BSF 105 determines that the first SUPI is not the same as (is inconsistent with) the second SUPI, the BSF 105 determines that the IP address to be verified is the non-real IP address of the terminal 101.

It is noted that the above methods 1 and 2 are only examples given to facilitate those skilled in the art to understand the implementation of "the BSF determines whether the IP address to be verified is the real IP address of the terminal", that is, other means may also be used to implement the solution of "the BSF determines whether the IP address to be verified is the real IP address of the terminal", and the disclosure does not limit this and details are not repeated herein. The above methods 1 and 2 may be implemented in any combination with the steps in any embodiment of the present disclosure.

In an example, in an embodiment of the present disclosure, in a case where the BSF 105 determines that the IP address to be verified is the real IP address of the terminal 101, the BSF 105 sends the SUPI corresponding to the IP address to be verified to the NEF 104. The NEF 104 receives the SUPI from the BSF 105, and the NEF 104 obtains an AF-specific UE ID from the UDM. The NEF 104 sends the AF-specific UE ID to the second edge server 103, and the second edge server 103 sets the AF-specific UE ID as the edge UE ID; or, the NEF 104 sends the AF-specific UE ID to the second edge server 103, and the second edge server 103 sends the AF-specific UE ID to the first edge server 102, and the first edge server 102 sets the AF-specific UE ID as the edge UE ID; or, the NEF 104 sends the AF-specific UE ID to the first edge server 102, and the first edge server 102 sets the AF-specific UE ID as the edge UE ID.

In an example, in an embodiment of the present disclosure, in a case where BSF 105 determines that the IP address to be verified is the not-real IP address of the terminal 101, an error message is sent to the NEF 104. That is, in a case where the BSF 105 determines that the IP address to be verified is not the real IP address of the terminal 101, the BSF 105 sends the error message to the NEF 104. In a case where the NEF 104 receives the error message from the BSF 105, the NEF 104 forwards the error message to the first edge server 102/second edge server 103. For example, the NEF 104 forwards the error message to the first edge server 102; or, the NEF 104 forwards the error message to the second edge server 103; or, the NEF 104 forwards the error message to the second edge server 103, and the second edge server 103 forwards the error message to the first edge server 102.

Please refer to FIG. 6a, FIG. 6a is a flowchart illustrating a method of IP address verification for an edge computing scenario according to an embodiment of the present disclosure. It is noted that the method may be used in a communication system 200, as shown in FIG. 6a, and the method may include but is not limited to the following steps.

In step 601a, a terminal 201 sends an IP address to be verified and first verification information of the IP address to be verified to a first edge server 202.

In the embodiment of the present disclosure, for an optional implementation of step 601a, reference may be made to an optional implementation of step 501a in FIG. 5a, and other related parts in the embodiment involved in FIG. 5a, and details are not repeated here.

In step 602a, the first edge server 202 receives the IP address to be verified and the first verification information sent by the terminal 201, and sends the IP address to be verified and the first verification information to a NEF 204.

In step 603a, the NEF 204 sends the received IP address to be verified and the first verification information to a BSF (binding support function) 205.

In an implementation, the first verification information may be generated by the terminal 201 based on the IP address to be verified and the SUPI. In this embodiment, the NEF 204 may directly send the received IP address to be verified and the first verification information to the BSF 205.

In step 604a, the BSF 205 determines whether the IP address to be verified is a real IP address of the terminal 201 according to the received IP address to be verified and the first verification information.

In the embodiment of the present disclosure, for an optional implementation of step 604a, reference may be made to an optional implementation of step 505a in FIG. 5a, and other related parts in the embodiment involved in FIG. 5a, and details are not repeated here.

In an example, in an embodiment of the present disclosure, in a case where the BSF 205 determines that the IP address to be verified is the real IP address of the terminal 201, the BSF 205 sends the SUPI corresponding to the IP address to be verified to the NEF 204. The NEF 204 receives the SUPI from the BSF 205, and the NEF 204 obtains an AF-specific UE ID from the UDM. The NEF 204 sends the AF-specific UE ID to the first edge server 202, and the first edge server 202 sets the AF-specific UE ID as the edge UE ID.

In an example, in an embodiment of the present disclosure, in a case where BSF 205 determines that the IP address to be verified is the not-real IP address of the terminal 201, an error message is sent to the NEF 204. That is, in a case where the BSF 205 determines that the IP address to be verified is not the real IP address of the terminal 201, the BSF 205 sends the error message to the NEF 204. In a case where the NEF 204 receives the error message from the BSF 205, the NEF 204 forwards the error message to the first edge server 202.

Please refer to FIG. 6b, FIG. 6b is a flowchart illustrating a method of IP address verification for an edge computing scenario according to an embodiment of the present disclosure. It is noted that the method may be used in a communication system 200, as shown in FIG. 6b, and the method may include but is not limited to the following steps.

In step 601b, a terminal 201 sends an IP address to be verified and first verification information of the IP address to be verified to a first edge server 202.

In the embodiment of the present disclosure, for an optional implementation of step 601b, reference may be made to an optional implementation of step 501b in FIG. 5b, and other related parts in the embodiment involved in FIG. 5b, and details are not repeated here.

In step 602b, the first edge server 202 receives the IP address to be verified and the first verification information sent by the terminal 201, and sends the IP address to be verified and the first verification information to the NEF 204.

In step 603b, the NEF 204 sends the received IP address to be verified and the first verification information to the BSF 205.

In an implementation, the first verification information may include a random number, the random number is obtained from the BSF 205 after the terminal 201 completes authentication with the BSF 205 using a GBA authentication service. In this embodiment, the NEF 204 may directly send the received IP address to be verified and the first verification information to the BSF 205.

In step 604b, the BSF 205 receives the IP address to be verified and the random number, determines an IMPI corresponding to the random number, determines a first SUPI corresponding to the IMPI, and determines, according to the first SUPI and the IP address to be verified, whether the IP address to be verified is the real IP address of the terminal 201.

In the embodiment of the present disclosure, for an optional implementation of step 604b, reference may be made to an optional implementation of step 505b in FIG. 5b, and other related parts in the embodiment involved in FIG. 5b, and details are not repeated here.

In an example, in an embodiment of the present disclosure, in a case where the BSF 205 determines that the IP address to be verified is the real IP address of the terminal 201, the BSF 205 sends the SUPI corresponding to the IP address to be verified to the NEF 204. The NEF 204 receives the SUPI from the BSF 205, and the NEF 204 obtains an AF-specific UE ID from the UDM. The NEF 204 sends the AF-specific UE ID to the first edge server 202, and the first edge server 202 sets the AF-specific UE ID as the edge UE ID.

In an example, in an embodiment of the present disclosure, in a case where BSF 205 determines that the IP address to be verified is the not-real IP address of the terminal 201, an error message is sent to the NEF 204. That is, in a case where the BSF 205 determines that the IP address to be verified is not the real IP address of the terminal 201, the BSF 205 sends the error message to the NEF 204. In a case where the NEF 204 receives the error message from the BSF 205, the NEF 204 forwards the error message to the first edge server 202.

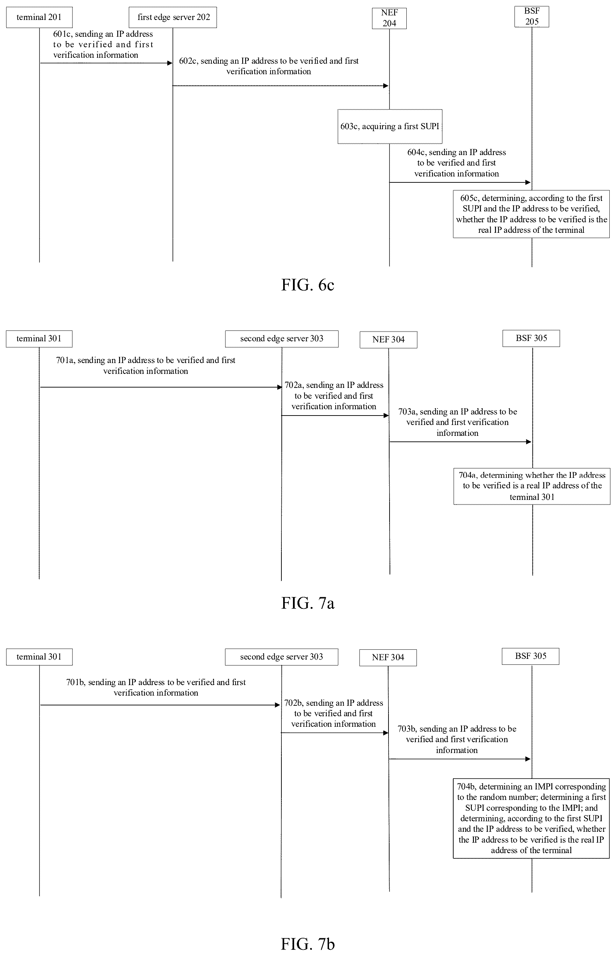

Please refer to FIG. 6c, FIG. 6c is a flowchart illustrating a method of IP address verification for an edge computing scenario according to an embodiment of the present disclosure. It is noted that the method may be used in a communication system 200, as shown in FIG. 6c, and the method may include but is not limited to the following steps.

In step 601c, a terminal 201 sends an IP address to be verified and first verification information of the IP address to be verified to a first edge server 202.

In the embodiment of the present disclosure, for an optional implementation of step 601c, reference may be made to an optional implementation of step 501c in FIG. 5c, and other related parts in the embodiment involved in FIG. 5c, and details are not repeated here.

In step 602c, the first edge server 202 receives the IP address to be verified and the first verification information sent by the terminal 201, and sends the IP address to be verified and the first verification information to the NEF 204.

In an implementation, the first verification information may include an A-KID.

In step 603c, the NEF 204 acquires a first SUPI from an AAnF based on the A-KID.

In the embodiment of the present disclosure, for an optional implementation of step 603c, reference may be made to an optional implementation of step 504c in FIG. 5c, and other related parts in the embodiment involved in FIG. 5c, and details are not repeated here.

In step 604c, the NEF 204 sends the received first SUPI and the IP address to be verified to the BSF 205.

In step 605c, the BSF 205 receives the first SUPI and the IP address to be verified, and determines whether the IP address to be verified is the real IP address of the terminal 201 according to the first SUPI and the IP address to be verified.

In the embodiment of the present disclosure, for an optional implementation of step 605c, reference may be made to an optional implementation of step 506c in FIG. 5c, and other related parts in the embodiment involved in FIG. 5c, and details are not repeated here.

In an example, in an embodiment of the present disclosure, in a case where the BSF 205 determines that the IP address to be verified is the real IP address of the terminal 201, the BSF 205 sends the SUPI corresponding to the IP address to be verified to the NEF 204. The NEF 204 receives the SUPI from the BSF 205, and the NEF 204 obtains an AF-specific UE ID from the UDM. The NEF 204 sends the AF-specific UE ID to the first edge server 202, and the first edge server 202 sets the AF-specific UE ID as the edge UE ID.

In an example, in an embodiment of the present disclosure, in a case where BSF 205 determines that the IP address to be verified is the not-real IP address of the terminal 201, an error message is sent to the NEF 204. That is, in a case where the BSF 205 determines that the IP address to be verified is not the real IP address of the terminal 201, the BSF 205 sends the error message to the NEF 204. In a case where the NEF 204 receives the error message from the BSF 205, the NEF 204 forwards the error message to the first edge server 202.

Please refer to FIG. 7a, FIG. 7a is a flowchart illustrating a method of IP address verification for an edge computing scenario according to an embodiment of the present disclosure. It is noted that the method may be used in a communication system 300, as shown in FIG. 7a, and the method may include but is not limited to the following steps.

In step 701a, a terminal 301 sends an IP address to be verified and first verification information of the IP address to be verified to a second edge server 303.

In the embodiment of the present disclosure, for an optional implementation of step 701a, reference may be made to an optional implementation of step 501a in FIG. 5a, and other related parts in the embodiment involved in FIG. 5a, and details are not repeated here.

In step 702a, the second edge server 303 sends the received IP address to be verified and the first verification information to a NEF 304.

In step 703a, the NEF 304 sends the received IP address to be verified and the first verification information to a BSF (binding support function) 305.

In an implementation, the first verification information may be generated by the terminal 301 based on the IP address to be verified and the SUPI. In this embodiment, the NEF 304 may directly send the received IP address to be verified and the first verification information to the BSF 305.

In step 704a, the BSF 305 determines whether the IP address to be verified is a real IP address of the terminal 301 according to the received IP address to be verified and the first verification information.

In the embodiment of the present disclosure, for an optional implementation of step 704a, reference may be made to an optional implementation of step 505a in FIG. 5a, and other related parts in the embodiment involved in FIG. 5a, and details are not repeated here.

In an example, in an embodiment of the present disclosure, in a case where the BSF 305 determines that the IP address to be verified is the real IP address of the terminal 301, the BSF 305 sends the SUPI corresponding to the IP address to be verified to the NEF 304. The NEF 304 receives the SUPI from the BSF 305, and the NEF 304 obtains an AF-specific UE ID from the UDM. The NEF 304 sends the AF-specific UE ID to the second edge server 303, and the second edge server 303sets the AF-specific UE ID as the edge UE ID.

In an example, in an embodiment of the present disclosure, in a case where BSF 305 determines that the IP address to be verified is the not-real IP address of the terminal 301, an error message is sent to the NEF 304. That is, in a case where the BSF 305 determines that the IP address to be verified is not the real IP address of the terminal 301, the BSF 305 sends the error message to the NEF 304. In a case where the NEF 304 receives the error message from the BSF 305, the NEF 304 forwards the error message to the second edge server 303.

Please refer to FIG. 7b, FIG. 7b is a flowchart illustrating a method of IP address verification for an edge computing scenario according to an embodiment of the present disclosure. It is noted that the method may be used in a communication system 300, as shown in FIG. 7b, and the method may include but is not limited to the following steps.

In step 701b, a terminal 301 sends an IP address to be verified and first verification information of the IP address to be verified to a first edge server 302.

In the embodiment of the present disclosure, for an optional implementation of step 701b, reference may be made to an optional implementation of step 501b in FIG. 5b, and other related parts in the embodiment involved in FIG. 5b, and details are not repeated here.

In step 702b, the second edge server 303 receives the IP address to be verified and the first verification information sent by the terminal 301, and sends the IP address to be verified and the first verification information to the NEF 304.

In step 703b, the NEF 304 sends the received IP address to be verified and the first verification information to the BSF 305.

In an implementation, the first verification information may include a random number, the random number is obtained from the BSF 305 after the terminal 301 completes authentication with the BSF 305 using a GBA authentication service. In this embodiment, the NEF 304 may directly send the received IP address to be verified and the first verification information to the BSF 305.

In step 704b, the BSF 305 receives the IP address to be verified and the random number, determines an IMPI corresponding to the random number, determines a first SUPI corresponding to the IMPI, and determines, according to the first SUPI and the IP address to be verified, whether the IP address to be verified is the real IP address of the terminal 301.

In the embodiment of the present disclosure, for an optional implementation of step 704b, reference may be made to an optional implementation of step 505b in FIG. 5b, and other related parts in the embodiment involved in FIG. 5b, and details are not repeated here.

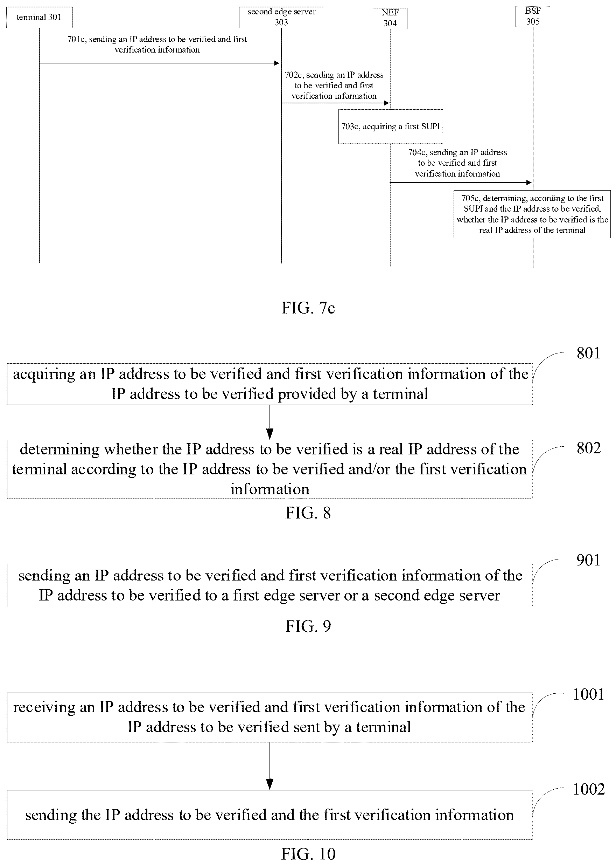

Please refer to FIG. 7c, FIG. 7c is a flowchart illustrating a method of IP address verification for an edge computing scenario according to an embodiment of the present disclosure. It is noted that the method may be used in a communication system 300, as shown in FIG. 7c, and the method may include but is not limited to the following steps.

In step 701c, a terminal 301 sends an IP address to be verified and first verification information of the IP address to be verified to a second edge server 303.

In the embodiment of the present disclosure, for an optional implementation of step 701c, reference may be made to an optional implementation of step 501c in FIG. 5c, and other related parts in the embodiment involved in FIG. 5c, and details are not repeated here.

In step 702c, the second edge server 303 receives the IP address to be verified and the first verification information sent by the terminal 301, and sends the IP address to be verified and the first verification information to the NEF 304.

In an implementation, the first verification information may include an A-KID.

In step 703c, the NEF 304 acquires a first SUPI from an AAnF based on the A-KID.

In the embodiment of the present disclosure, for an optional implementation of step 703c, reference may be made to an optional implementation of step 504c in FIG. 5c, and other related parts in the embodiment involved in FIG. 5c, and details are not repeated here.

In step 704c, the NEF 304 sends the received first SUPI and the IP address to be verified to the BSF 305.

In step 705c, the BSF 305 receives the first SUPI and the IP address to be verified, and determines whether the IP address to be verified is the real IP address of the terminal 301 according to the first SUPI and the IP address to be verified.

In the embodiment of the present disclosure, for an optional implementation of step 705c, reference may be made to an optional implementation of step 506c in FIG. 5c, and other related parts in the embodiment involved in FIG. 5c, and details are not repeated here.

In an example, in an embodiment of the present disclosure, in a case where the BSF 305 determines that the IP address to be verified is the real IP address of the terminal 301, the BSF 305 sends the SUPI corresponding to the IP address to be verified to the NEF 304. The NEF 304 receives the SUPI from the BSF 305, and the NEF 304 obtains an AF-specific UE ID from the UDM. The NEF 304 sends the AF-specific UE ID to the second edge server 303, and the second edge server 303 sets the AF-specific UE ID as the edge UE ID.

In an example, in an embodiment of the present disclosure, in a case where BSF 305 determines that the IP address to be verified is the not-real IP address of the terminal 301, an error message is sent to the NEF 304. That is, in a case where the BSF 305 determines that the IP address to be verified is not the real IP address of the terminal 301, the BSF 305 sends the error message to the NEF 304. In a case where the NEF 304 receives the error message from the BSF 305, the NEF 304 forwards the error message to the second edge server 303.

Please refer to FIG. 8, FIG. 8 is a flowchart illustrating a method of IP address verification for an edge computing scenario according to an embodiment of the present disclosure. It is noted that the method may be performed by a BSF (binding support function), as shown in FIG. 8, and the method may include but is not limited to the following steps.

In step 801, an IP address to be verified and first verification information of the IP address to be verified provided by a terminal are acquired.

In some embodiments, the first verification information may be generated by the terminal based on the IP address to be verified and a SUPI; or, the first verification information may include a random number, and the random number is obtained from the BSF after the terminal completes authentication with the BSF using a GBA authentication service. In this embodiment, the BSF may acquire the IP address to be verified and the first verification information provided by the terminal from the NEF.

In an implementation, the terminal sends the IP address to be verified and the first verification information of the IP address to be verified to a first edge server. The first edge server sends the received IP address to be verified and the first verification information to the second edge server. The second edge server sends the received IP address to be verified and the first verification information to a NEF. The NEF sends the received IP address to be verified and the first verification information to a BSF. The BSF receives the IP address to be verified and the first verification information from the NEF, so that the BSF may determine whether the IP address to be verified is a real IP address of the terminal according to the IP address to be verified and/or the first verification information.

In another implementation, the terminal sends the IP address to be verified and the first verification information of the IP address to be verified to the first edge server. The first edge server sends the received IP address to be verified and the first verification information to the NEF. The NEF sends the received IP address to be verified and the first verification information to the BSF. The BSF receives the IP address to be verified and the first verification information from the NEF, so that the BSF may determine whether the IP address to be verified is the real IP address of the terminal according to the IP address to be verified and/or the first verification information.

In another implementation, the terminal sends the IP address to be verified and the first verification information of the IP address to be verified to the second edge server. The second edge server sends the received IP address to be verified and the first verification information to the NEF. The NEF sends the received IP address to be verified and the first verification information to the BSF. The BSF receives the IP address to be verified and the first verification information from the NEF, so that the BSF may determine whether the IP address to be verified is the real IP address of the terminal according to the IP address to be verified and/or the first verification information.

In some embodiments, the first verification information may include an A-KID. In an implementation, the terminal sends the IP address to be verified and the first verification information of the IP address to be verified to the first edge server. The first edge server sends the received IP address to be verified and the first verification information to the second edge server. The second edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified.

In another implementation, the terminal sends the IP address to be verified and the first verification information of the IP address to be verified to the first edge server. The first edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified.

In another implementation, the terminal sends the IP address to be verified and the first verification information of the IP address to be verified to the second edge server. The second edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified.

In step 802, it is determined whether the IP address to be verified is the real IP address of the terminal according to the IP address to be verified and/or the first verification information.

It should be noted that, depending on the type of the first verification information, the implementation of the BSF determining whether the IP address to be verified is the real IP address of the terminal may also be different. For example, the first verification information may be generated by the IP address and the SUPI, or the first verification information may be the random number, or the first verification information may the A-KID.

In some embodiments, the first verification information is generated by the terminal based on the IP address to be verified and the SUPI. In an implementation, the BSF may determine second verification information according to the IP address to be verified. The BSF determines whether the first verification information is the same as the second verification information. in a case where the first verification information is the same as the second verification information, the BSF may determine that the IP address to be verified is the real IP address of the terminal. In an example, in a case where the BSF determines that the first verification information is not the same as the second verification information, and then the BSF determines that the IP address to be verified is a non-real IP address of the terminal.

As an example, an example of a possible implementation of the BSF d determining the second verification information according to the IP address to be verified includes: acquiring the second verification information corresponding to the IP address to be verified from a plurality of pieces of verification information; in which one IP address corresponds to one piece of verification information, and the plurality of pieces of verification information are generated by the BSF based on IP addresses and SUPIs corresponding to the IP addresses respectively.

In another implementation, the BSF may acquire a first IP address corresponding to the first verification information from a plurality of pieces of verification information. The BSF determines whether the first IP address is the same as the IP address to be verified. In a case where the first IP address is the same as the IP address to be verified, the BSF determines that the IP address to be verified is the real IP address of the terminal. In an example, in a case where the BSF determines that the first IP address is not the same as the IP address to be verified, the BSF determines that the IP address to be verified is the non-real IP address of the terminal.

In an example, the plurality of pieces of verification information may be pre-generated by the BSF. In some embodiments, an example of a possible implementation of the BSF generating the plurality of pieces of verification information includes: for each IP address among the IP addresses, performing hash processing on the each IP address and a SUPI corresponding to the each IP address, to obtain verification information of the each IP address. An example of another possible implementation of the BSF generating the plurality of pieces of verification information includes: for each IP address among the IP addresses, deriving, according to each IP address and a SUPI corresponding to the each IP address, verification information of the each IP address by using a KDF.

In some embodiments, the first verification information includes a random number, and the random number is obtained from the BSF after the terminal completes authentication with the BSF using a GBA authentication service. In an implementation, the BSF receives the IP address to be verified and the random number, and the BSF may determine an IMPI corresponding to the random number and determine the first SUPI corresponding to the IMPI. The BSF determines, according to the first SUPI and the IP address to be verified, whether the IP address to be verified is the real IP address of the terminal.

In some embodiments, the first verification information includes an A-KID. In an implementation, the BSF acquires a first SUPI corresponding to the A-KID from the NEF, and the first SUPI is acquired by the NEF from the AAnF based on the A-KID. The BSF determines, according to the first SUPI received from the NEF and the IP address to be verified, whether the IP address to be verified is the real IP address of the terminal.

As an example, an implementation of the BSF determining whether the IP address to be verified is the real IP address of the terminal according to the first SUPI and the IP address to be verified may include as follows: the BSF determines, based on a correspondence between an IP address and a SUPI, a first IP address corresponding to the first SUPI. The BSF determines whether the first IP address is the same as the IP address to be verified. In a case where the first IP address is the same as the IP address to be verified, the BSF determines that the IP address to be verified is the real IP address of the terminal. In an example, in a case where the BSF determines that the first IP address is not the same as the IP address to be verified, the BSF determines that the IP address to be verified is the non-real IP address of the terminal.

As another example, an implementation of the BSF determining whether the IP address to be verified is the real IP address of the terminal according to the first SUPI and the IP address to be verified may include as follows: the BSF determines, based on a correspondence between an IP address and a SUPI, a second SUPI corresponding to the IP address to be verified. The BSF determines whether the first SUPI is the same as the second SUPI. In a case where the first SUPI is the same as the second SUPI, the BSF determines that the IP address to be verified is the real IP address of the terminal. In an example, in a case where the BSF determines that the first SUPI is not the same as the second SUPI, the BSF determines that the IP address to be verified is the non-real IP address of the terminal.

In some embodiments, in a case where the BSF determines that the IP address to be verified is the real IP address of the terminal, the BSF sends the SUPI corresponding to the IP address to be verified to the NEF. The NEF receives the SUPI from the BSF, and the NEF acquires an AF-specific UE ID from a UDM. The NEF sends the AF-specific UE ID to the second edge server, and the second edge server sets the AF-specific UE ID as an edge UE ID; or, the NEF sends the AF-specific UE ID to the second edge server, and the second edge server sends the AF-specific UE ID to the first edge server, and the first edge server sets the AF-specific UE ID as the edge UE ID; or, the NEF sends the AF-specific UE ID to the first edge server, and the first edge server sets the AF-specific UE ID as the edge UE ID.

In some embodiments, in a case where the BSF determines that the IP address to be verified is the not-real IP address of the terminal, the BSF sends an error message to the NEF. That is, in a case where the BSF determines that the IP address to be verified is not the real IP address of the terminal, the BSF sends the error message to the NEF. When the NEF receives the error message from the BSF, the NEF forwards the error message to the first edge server/the second edge server. For example, the NEF forwards the error message to the first edge server; or, the NEF forwards the error message to the second edge server; or, the NEF forwards the error message to the second edge server, and the second edge server forwards the error message to the first edge server.

By implementing the embodiments of the present disclosure, the BSF determines whether the IP address to be verified is the real IP address of the terminal according to the IP address to be verified and/or the first verification information provided by the terminal, which may solve a problem of lack of effective means to verify an IP address provided by a terminal in the edge computing scenario, and improve communication security of the edge computing scenario.

Please refer to FIG. 9, FIG. 9 is a flowchart illustrating a method of IP address verification for an edge computing scenario according to an embodiment of the present disclosure. It is noted that the method may be performed by a terminal, as shown in FIG. 9, and the method may include but is not limited to the following step.

In step 901, an IP address to be verified and first verification information of the IP address to be verified are sent to a first edge server or a second edge server, to send the IP address to be verified and the first verification information to the BSF via the edge server, such as the first edge server or the second edge server, and a NEF.

In an embodiment of the present disclosure, the first verification information is used for a BSF to determine whether the IP address to be verified is a real IP address of the terminal.

In some embodiments, the first verification information may be generated by the terminal based on the IP address to be verified and a SUPI. In an implementation, the terminal determines the SUPI, such as a SUPI of the terminal. The terminal may generate the first verification information of the IP address to be verified based on the IP address to be verified and the SUPI.

As an example, the terminal may perform hash processing on the IP address to be verified and the SUPI to obtain the first verification information of the IP address to be verified.

As another example, the terminal may derive, according to the IP address to be verified and the SUPI, the first verification information of the IP address to be verified by using a KDF.

In some embodiments, the first verification information includes a random number, in which the random number is obtained from the BSF after the terminal completes authentication with the BSF using a GBA authentication service.

In an example, in an embodiment, the terminal sends the IP address to be verified and the first verification information of the IP address to be verified to a first edge server. The first edge server sends the received IP address to be verified and the first verification information to the second edge server. The second edge server sends the received IP address to be verified and the first verification information to a NEF. The NEF sends the received IP address to be verified and the first verification information to a BSF. The BSF receives the IP address to be verified and the first verification information from the NEF, so that the BSF may determine whether the IP address to be verified is a real IP address of the terminal according to the IP address to be verified and/or the first verification information. For the implementation of this process, reference may be made to the corresponding description in the embodiment involved in FIG. 5, and details are not repeated herein.

In an example, in an embodiment, the terminal sends the IP address to be verified and the first verification information of the IP address to be verified to the first edge server. The first edge server sends the received IP address to be verified and the first verification information to the NEF. The NEF sends the received IP address to be verified and the first verification information to the BSF. The BSF receives the IP address to be verified and the first verification information from the NEF, so that the BSF may determine whether the IP address to be verified is the real IP address of the terminal according to the IP address to be verified and/or the first verification information. For the implementation of this process, reference may be made to the corresponding description in the embodiment involved in FIG. 5, and details are not repeated herein.

In an example, in an embodiment, the terminal sends the IP address to be verified and the first verification information of the IP address to be verified to the second edge server. The second edge server sends the received IP address to be verified and the first verification information to the NEF. The NEF sends the received IP address to be verified and the first verification information to the BSF. The BSF receives the IP address to be verified and the first verification information from the NEF, so that the BSF may determine whether the IP address to be verified is the real IP address of the terminal according to the IP address to be verified and/or the first verification information. For the implementation of this process, reference may be made to the corresponding description in the embodiment involved in FIG. 5, and details are not repeated herein.

In some embodiments, the first verification information may include an A-KID. In an example, in an embodiment, the terminal sends the IP address to be verified and the first verification information of the IP address to be verified to the first edge server. The first edge server sends the received IP address to be verified and the first verification information to the second edge server. The second edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified. For the implementation of this process, reference may be made to the corresponding description in the embodiment involved in FIG. 5, and details are not repeated herein.

In an example, in an embodiment, the terminal sends the IP address to be verified and the first verification information of the IP address to be verified to the first edge server. The first edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified. For the implementation of this process, reference may be made to the corresponding description in the embodiment involved in FIG. 5, and details are not repeated herein.

In an example, in an embodiment, the terminal sends the IP address to be verified and the first verification information of the IP address to be verified to the second edge server. The second edge server sends the received IP address to be verified and the first verification information to the NEF. The NEF obtains the first SUPI from the AAnF based on the A-KID. The NEF sends the received IP address to be verified to the BSF. The BSF receives the first SUPI and the IP address to be verified sent by the NEF, and determines whether the IP address to be verified is the real IP address of the terminal according to the first SUPI and the IP address to be verified. For the implementation of this process, reference may be made to the corresponding description in the embodiment involved in FIG. 5, and details are not repeated herein.

By implementing the embodiments of the present disclosure, the terminal may send the IP address to be verified and the first verification information to the edge server, to send the IP address to be verified and the first verification information to the BSF via the edge server and the NEF, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

Please refer to FIG. 10, FIG. 10 is a flowchart illustrating a method of IP address verification for an edge computing scenario according to an embodiment of the present disclosure. It is noted that the method may be performed by a first edge server, as shown in FIG. 10, and the method may include but is not limited to the following steps.

In step 1001, an IP address to be verified and first verification information of the IP address to be verified sent by a terminal are received.

In some embodiments, the first verification information is generated by the terminal based on the IP address to be verified and a SUPI; or, the first verification information includes a random number, in which the random number is obtained from a BSF after the terminal completes authentication with the BSF using a GBA authentication service; or, the first verification information includes an A-KID.

In step 1002, the IP address to be verified and the first verification information are sent.

In an embodiment of the present disclosure, the first verification information is used for a BSF to determine whether the IP address to be verified is a real IP address of the terminal.

In some embodiments, the first edge server sends the IP address to be verified and the first verification information to a second edge server. The second edge server sends the received IP address to be verified and the first verification information to a NEF. Alternatively, the first edge server sends the IP address to be verified and the first verification information to the NEF. For the implementation of the solution that the NEF receives the IP address to be verified and the first verification information, reference may be made to the corresponding description in the embodiment involved in FIG. 5, and details are not repeated here.

In an example, in some embodiments, the first edge server may receive an error message sent by a NEF, in which the error message is sent to the NEF in a case where the BSF determines that the IP address to be verified is a non-real IP address of the terminal.

In an example, in some embodiments, the first edge server may receive an error message sent by a second edge server, in which the error message is sent to a NEF in a case where the BSF determines that the IP address to be verified is a non-real IP address of the terminal, and is forwarded by the NEF to the second edge server.

By implementing the embodiments of the present disclosure, the first edge server receives the IP address to be verified and the first verification information sent by the terminal, and sends the IP address to be verified and the first verification information, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

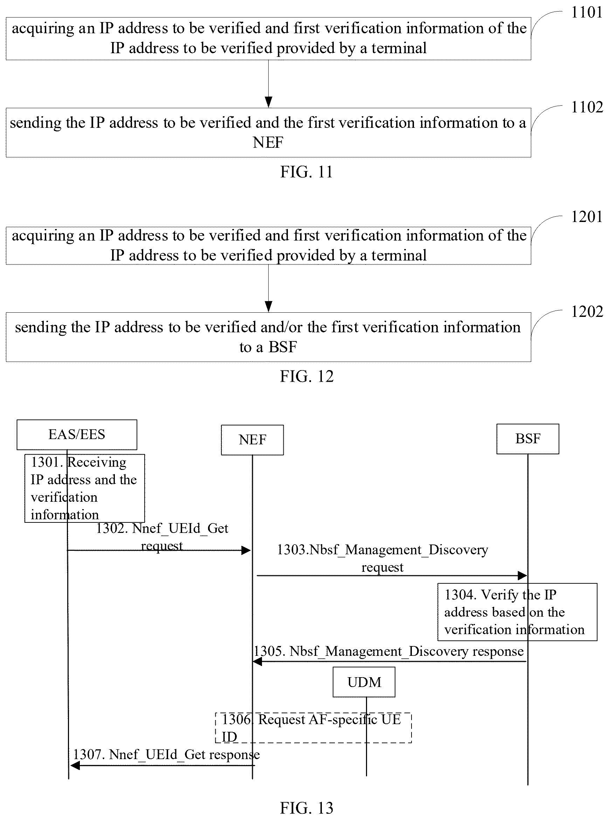

Please refer to FIG. 11, FIG. 11 is a flowchart illustrating a method of IP address verification for an edge computing scenario according to an embodiment of the present disclosure. It is noted that the method may be performed by a second edge server, as shown in FIG. 11, and the method may include but is not limited to the following steps.

In step 1101, an IP address to be verified and first verification information of the IP address to be verified provided by a terminal are acquired.

In some embodiments, the first verification information is generated by the terminal based on the IP address to be verified and a SUPI; or, the first verification information includes a random number, in which the random number is obtained from a BSF after the terminal completes authentication with the BSF using a GBA authentication service; or, the first verification information includes an A-KID.

In some embodiments, the second edge server receives the IP address to be verified and the first verification information sent by the terminal.

In some embodiments, the second edge server receives the IP address to be verified and the first verification information sent by the first edge server, in which the IP address to be verified and the first verification information are acquired by the first edge server from the terminal.

In step 1102, the IP address to be verified and the first verification information are sent to a NEF.

In the embodiment of the present disclosure, the first verification information is used for a BSF to determine whether the IP address to be verified is a real IP address of the terminal.

In the embodiment of the present disclosure, for the implementation of the solution that the NEF receives the IP address to be verified and the first verification information, reference may be made to the corresponding description in the embodiment involved in FIG. 5, details are not repeated here.

In an example, in some embodiments, the second edge server receives an error message sent by the NEF. The error message is sent to the NEF in a case where the BSF determines that the IP address to be verified is a non-real IP address of the terminal.

In an example, in some embodiments, the second edge server receives an error message sent by the NEF. The error message is sent to the NEF in a case where the BSF determines that the IP address to be verified is a non-real IP address of the terminal. The second edge server sends the error message received from the NEF to the first edge server.

By implementing the embodiments of the present disclosure, the second edge server acquires the IP address to be verified and the first verification information provided by the terminal, and sends the IP address to be verified and the first verification information to the NEF, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

Please refer to FIG. 12, FIG. 12 is a flowchart illustrating a method of IP address verification for an edge computing scenario according to an embodiment of the present disclosure. It is noted that the method may be performed by a NEF, as shown in FIG. 12, and the method may include but is not limited to the following steps.

In step 1201, an IP address to be verified and first verification information of the IP address to be verified provided by a terminal are acquired.

In some embodiments, the NEF may receive the IP address to be verified and the first verification information sent by the first edge server, and the IP address to be verified and the first verification information may be acquired by the first edge server from the terminal.

In some embodiments, the NEF may receive the IP address to be verified and the first verification information sent by the second edge server. The IP address to be verified and the first verification information may be acquired by the second edge server from the terminal. Alternatively, the IP address to be verified and the first verification information may be acquired by the second edge server from the first edge server, and the first edge server acquires the IP address to be verified and the first verification information from the terminal.

In step 1202, the IP address to be verified and/or the first verification information are sent to a BSF.

In an embodiment of the present disclosure, the first verification information is used for the BSF to determine whether the IP address to be verified is a real IP address.

In some embodiments, the first verification information is generated by the terminal based on the IP address to be verified and a SUPI; or, the first verification information includes a random number, and the random number is obtained from a BSF after the terminal completes the authentication with the BSF using a GBA authentication service. In this embodiment, the NEF may send the IP address to be verified and the first verification information to the BSF. For the implementation of the solution after the BSF receives the IP address to be verified and the first verification information, reference may be made to the corresponding description in the embodiment involved in FIG. 5, and details are not repeated here.

In some embodiments, the first verification information includes an A-KID. In this embodiment, the NEF may acquire, from an AAnF, a first SUPI corresponding to the A-KID. The NEF sends the IP address to be verified and the first SUPI to the BSF, in which the first SUPI is used for the BSF to determine whether the IP address to be verified is the real IP address of the terminal. For the implementation of the solution after the BSF receives the IP address to be verified and the first SUPI, reference may be made to the corresponding description in the embodiment involved in FIG. 5, and details are not repeated here.

In an example, in some embodiments, the NEF may receive an error message sent by the BSF; the error message is sent to the NEF in a case where the BSF determines that the IP address to be verified is a non-real IP address of the terminal. The NEF sends the error message to the first edge server or the second edge server.

By implementing the embodiments of the present disclosure, the NEF acquires the IP address to be verified and the first verification information provided by the terminal, and sends the IP address to be verified and the first verification information to the BSF, such that the BSF acquires the IP address to be verified and/or the first verification information provided by the terminal, which is convenient for the BSF to determine whether the IP address to be verified is the real IP address of the terminal, and may solve a problem of lack of effective means to verify an IP address provided by a terminal in the edge computing scenario, and improve communication security of the edge computing scenario.

It should be noted that since a BSF maintains a binding relationship of an IP address and a corresponding SUPI, the BSF can generate network side IP address verification information based on the IP address and the SUPI, so that the BSF can determine whether the IP address provided by the terminal is a real IP address of the terminal. Please refer to FIG. 13, FIG. 13 is a flowchart illustrating an interaction of a communication system according to an embodiment of the present disclosure. As shown in FIG. 13, an interaction process of the communication system may include the following steps.

In step 1301, an EAS receives the IP address and the verification information from the UE/EEC. The EES receives the IP address and the verification information from the EAS/UE/EEC.

In an implementation, the verification information is generated by the UE/EEC using the IP address and the SUPI.

In step 1302, the EAS/EES sends the IP address and the verification information to the NEF.

In step 1303, the NEF sends the IP address and the verification information to the BSF.

In step 1304, to verify the IP address, the BSF compares the network-side IP address verification information to the one received from the NEF.

In step 1305, if the network-side IP address verification information and the one provided by the NEF are identical, the BSF sends the SUPI to the NEF. Otherwise, the BSF sends an error message to the NEF.

In step 1306, if the NEF receives the SUPI from the BSF, the NEF gets an AF-specific UE ID from the UDM. Otherwise, step 1306 can be skipped.

In step 1307, if the NEF receives an error message from the BSF, the NEF forwards the message to the EAS/EES. Otherwise, the NEF sends the AF-specific UE ID to the EAS/EES.

In this embodiment, the IP address verification information can be obtained by hashing the SUPI and the IP address. Alternatively, the IP address verification information can also be derived based on the KDF as follows:
FC = 0xyy;
P0 = IP address;
L0 = length of P0;
wherein the input key KEY shall be SUPI, the FC is a function code and 0xyy indicates a function code that has not been assigned by 3GPP.

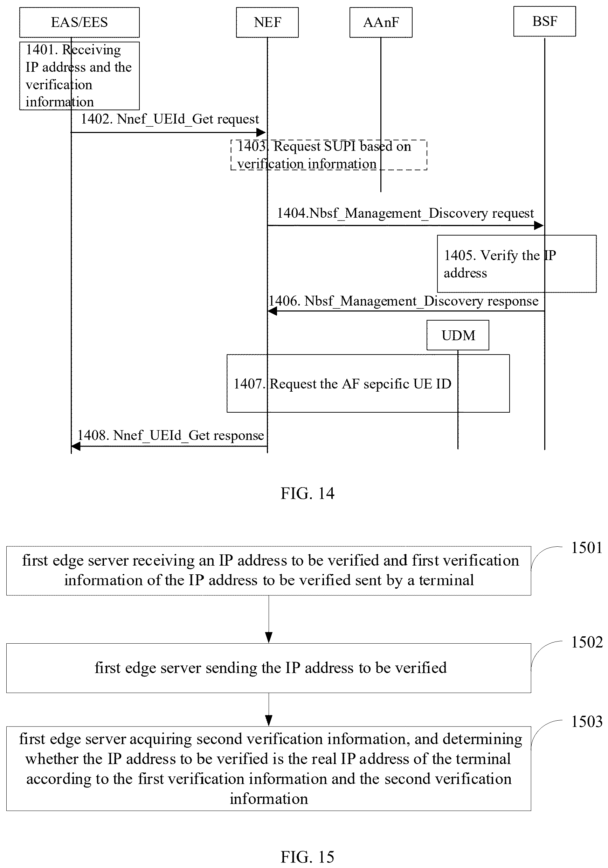

It should be noted that the verification information may be a random number in a GBA scenario or an A-KID in an AKMA scenario. Please refer to FIG. 14, FIG. 14 is a flowchart illustrating an interaction of a communication system according to an embodiment of the present disclosure. As shown in FIG. 14, an interaction process of the communication system may include the following steps.

In step 1401, the EAS receives the IP address and the verification information from the UE/EEC. The EES receives the IP address and the verification information from the EAS/UE/EEC.

In an implementation, the verification information may be the random number in the GBA scenario or the A-KID in the AKMA scenario.

In step 1402, the EAS/EES sends the IP address and the verification information to the NEF.

In step 1403, if the A-KID is provided, the NEF gets a SUPI from the AAnF. Otherwise, step 1403 can be skipped.

In step 1404, the NEF provides the IP address, the random number, or the SUPI to the BSF.

In step 1405, the BSF locates the network side IP address based on the received/newly located SUPI.

In specific, for the random number case, the BSF first locates the IMPI based on the random number. Then the BSF identifies the SUPI based on the IMPI.

In this embodiment, after the BSF locates the network-side IP address based on the received/newly located SUPI, the BSF compares the IP address with the newly received IP address.

In step 1406, if the IP addresses are not identical, the BSF sends an error message to the NEF. Otherwise, the BSF sends the SUPI to the NEF.

In step 1407, if the NEF receives the SUPI from the BSF, the NEF gets an AF-specific UE ID from the UDM. Otherwise, step 1407 can be skipped.

In step 1408, if the NEF receives the error message from the BSF, the NEF forwards the message to the EAS/EES. Otherwise, the NEF sends the AF-specific UE ID to the EAS/EES.

Embodiments of the present disclosure also provide a method of IP address verification for an edge computing scenario. The method may be performed by an edge server, and the edge server may be the first edge server described above. As shown in FIG. 15, the method may include but is not limited to the following steps 1501 to 1503.

In step 1501, the first edge server receives an IP address to be verified and first verification information of the IP address to be verified sent by a terminal.

In an implementation, the first verification information is generated by the terminal based on the IP address to be verified and a SUPI; or, the first verification information includes a random number, which is obtained from a BSF after the terminal completes authentication with the BSF using a GBA authentication service; or, the first verification information includes an A-KID.

In step 1502, the first edge server sends the received IP address to be verified to a NEF, or the first edge server sends the received IP address to be verified to the NEF through a second edge server.

In an implementation, the first verification information is generated by the terminal based on the IP address to be verified and the SUPI. In this embodiment, the NEF sends the received IP address to be verified to the BSF. The BSF receives the IP address to be verified, and the BSF obtains corresponding second verification information by querying according to the IP address to be verified, and transmits the second verification information to the first edge server via the NEF. The second verification information is generated by the BSF based on the IP address and the SUPI.

In an implementation, the first verification information includes the random number, and the random number is obtained from the BSF after the terminal completes authentication with the BSF using the GBA authentication service. In an example, in this embodiment, the NEF sends the received IP address to be verified to the BSF. The BSF receives the IP address to be verified, and the BSF obtains the corresponding SUPI by querying based on the IP address to be verified, and determines an IMPI corresponding to the SUPI, and determines the random number corresponding to the IMPI, and transmits the random number to the first edge server via the NEF. In an example, in this embodiment, the NEF sends the received IP address to be verified to the BSF. The BSF includes a mapping relationship between an IP address and a random number. The BSF receives the IP address to be verified, and may obtain the random number corresponding to the IP address to be verified by querying based on the mapping relationship, and transmit the random number to the first edge server via the NEF.

In an implementation, the first verification information includes the A-KID. In this embodiment, the NEF sends the received IP address to be verified to the BSF. The BSF includes a mapping relationship between an IP address and a SUPI. The BSF receives the IP address to be verified, and may obtain the SUPI corresponding to the IP address to be verified by querying according to the mapping relationship and send the SUPI to the NEF. The NEF obtains the corresponding A-KID from an AAnF based on the received SUPI, and sends the A-KID as the second verification information to the first edge server.

In an implementation, the first verification information includes the SUPI. In this embodiment, the NEF sends the received IP address to be verified to the BSF. The BSF includes a mapping relationship between the IP address and the SUPI. The BSF receives the IP address to be verified, and may obtain the SUPI corresponding to the IP address to be verified by querying according to the mapping relationship, and transmit the SUPI as the second verification information to the first edge server via the NEF.

In an example, in some embodiments, the BSF may also directly obtain the IP address to be verified from the first edge server, or the BSF may also directly obtain the IP address to be verified from the second edge server, and the second edge server obtains the IP address to be verified from the first edge server. For an implementation after the BSF receives the IP address to be verified, reference may be made to the above description, and details are not repeated herein.

In step 1503, the first edge server obtains the second verification information, and determines whether the IP address to be verified is a real IP address of the terminal according to the first verification information and the second verification information.

In an example, the first edge server compares the first verification information with the second verification information, and in a case where the first verification information is the same as the second verification information, the first edge server determines that the IP address to be verified is the real IP address of the terminal. In an example, in a case where the first verification information is different from the second verification information, the first edge server determines that the IP address to be verified is a non-real IP address of the terminal.

In the embodiment of the present disclosure, by using the first edge server to verify the IP address provided by the terminal, a problem of lack of effective means to verify the IP address provided by the terminal in the edge computing scenario may be resolved, and communication security of the edge computing scenario may be improved.

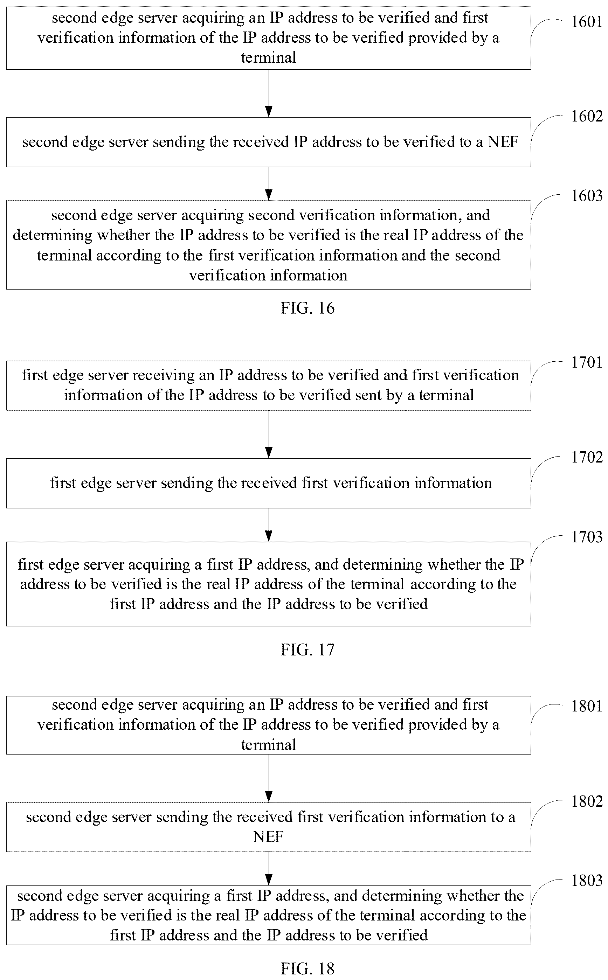

Embodiments of the present disclosure also provide a method of IP address verification for an edge computing scenario. The method may be performed by an edge server, and the edge server may be the second edge server described above. As shown in FIG. 16, the method may include but is not limited to the following steps 1601 to 1603.

In step 1601, the second edge server obtains an IP address to be verified and first verification information of the IP address to be verified provided by a terminal.

In an implementation, the second edge server may receive the IP address to be verified and the first verification information sent by the terminal. Or, in an implementation, the second edge server may receive the IP address to be verified and the first verification information sent by the first edge server, and the IP address to be verified and the first verification information are obtained by a first edge server from the terminal.

In an implementation, the first verification information is generated by the terminal based on the IP address to be verified and a SUPI; or, the first verification information includes a random number, which is obtained from a BSF after the terminal completes authentication with the BSF using a GBA authentication service; or, the first verification information includes an A-KID.

In step 1602, the second edge server sends the received IP address to be verified to a NEF.

In an implementation, the first verification information is generated by the terminal based on the IP address to be verified and the SUPI. In this embodiment, the NEF sends the received IP address to be verified to the BSF. The BSF receives the IP address to be verified, and the BSF obtains corresponding second verification information by querying according to the IP address to be verified, and transmits the second verification information to the second edge server via the NEF. The second verification information is generated by the BSF based on the IP address and the SUPI.

In an implementation, the first verification information includes the random number, and the random number is obtained from the BSF after the terminal completes authentication with the BSF using the GBA authentication service. In an example, in this embodiment, the NEF sends the received IP address to be verified to the BSF. The BSF receives the IP address to be verified, and the BSF obtains the corresponding SUPI by querying based on the IP address to be verified, and determines an IMPI corresponding to the SUPI, and determines the random number corresponding to the IMPI, and transmits the random number to the second edge server via the NEF. In an example, in this embodiment, the NEF sends the received IP address to be verified to the BSF. The BSF includes a mapping relationship between an IP address and a random number. The BSF receives the IP address to be verified, and may obtain the random number corresponding to the IP address to be verified by querying based on the mapping relationship, and transmit the random number to the second edge server via the NEF.

In an implementation, the first verification information includes the A-KID. In this embodiment, the NEF sends the received IP address to be verified to the BSF. The BSF includes a mapping relationship between an IP address and a SUPI. The BSF receives the IP address to be verified, and may obtain the SUPI corresponding to the IP address to be verified by querying according to the mapping relationship and send the SUPI to the NEF. The NEF obtains the corresponding A-KID from an AAnF based on the received SUPI, and sends the A-KID as the second verification information to the second edge server.

In an implementation, the first verification information includes the SUPI. In this embodiment, the NEF sends the received IP address to be verified to the BSF. The BSF includes a mapping relationship between the IP address and the SUPI. The BSF receives the IP address to be verified, and may obtain the SUPI corresponding to the IP address to be verified by querying according to the mapping relationship, and transmit the SUPI as the second verification information to the second edge server via the NEF.

In an example, in an implementation, the BSF may also directly obtain the IP address to be verified from the second edge server. For an implementation after the BSF receives the IP address to be verified, reference may be made to the above description, and details are not repeated herein.

In step 1603, the second edge server acquires the second verification information, and determines whether the IP address to be verified is a real IP address of the terminal according to the first verification information and the second verification information.

In an example, the second edge server compares the first verification information with the second verification information, and in a case where the first verification information is the same as the second verification information, the second edge server determines that the IP address to be verified is the real IP address of the terminal. In an example, in a case where the first verification information is different from the second verification information, the second edge server determines that the IP address to be verified is a non-real IP address of the terminal.

In the embodiment of the present disclosure, by using the second edge server to verify the IP address provided by the terminal, a problem of lack of effective means to verify the IP address provided by the terminal in the edge computing scenario may be resolved, and communication security of the edge computing scenario may be improved.

Embodiments of the present disclosure also provide a method of IP address verification for an edge computing scenario. The method may be performed by an edge server, and the edge server may be the first edge server described above. As shown in FIG. 17, the method may include but is not limited to the following steps 1701 to 1703.

In step 1701, the first edge server receives an IP address to be verified and first verification information of the IP address to be verified sent by a terminal.

In an implementation, the first verification information is generated by the terminal based on the IP address to be verified and a SUPI; or, the first verification information includes a random number, which is obtained from a BSF after the terminal completes authentication with the BSF using a GBA authentication service; or, the first verification information includes an A-KID.

In step 1702, the first edge server sends the received first verification information to a NEF.

In an implementation, the first verification information may be sent from the first edge server to the NEF directly. Or, the first verification information may be sent from the first edge server to a second edge server, and the second edge server sends the received first verification information to the NEF.

In an implementation, the first verification information is generated by the terminal based on the IP address to be verified and a SUPI. In this embodiment, the NEF sends the received first verification information to the BSF. The BSF receives the first verification information, and the BSF obtains a corresponding first IP address by querying according to the first verification information, and transmits the first IP address to the first edge server via the NEF. The BSF includes a plurality of pieces of verification information, one piece of verification information corresponds to one IP address, and each verification information is generated by the BSF based on the corresponding IP address and the SUPI corresponding to the IP address.

In an implementation, the first verification information includes the random number, and the random number is obtained from the BSF after the terminal completes authentication with the BSF using the GBA authentication service. In an example, in this embodiment, the NEF sends the received random number to the BSF. The BSF receives the random number, and the BSF determines an IMPI corresponding to the random number, determines the SUPI corresponding to the IMPI, determines the first IP address corresponding to the SUPI, and transmits the first IP address to the first edge server via the NEF. In an example, in this embodiment, the NEF sends the received random number to the BSF. The BSF includes a mapping relationship between an IP address and a random number. The BSF receives the random number, and may obtain the first IP address corresponding to the random number by querying based on the mapping relationship, and transmit the first IP address to the first edge server via the NEF.

In an implementation, the first authentication information includes the A-KID. In this embodiment, the NEF obtains the corresponding SUPI from an AAnF based on the received A-KID, and sends the SUPI to the BSF. The BSF includes a mapping relationship between an IP address and a SUPI. The BSF receives the SUPI, and may obtain the first IP address corresponding to the SUPI by querying according to the mapping relationship, and send the first IP address to the first edge server via the NEF.

In step 1703, the first edge server acquires the first IP address, and determines whether the IP address to be verified is a real IP address of the terminal according to the first IP address and the IP address to be verified.

In an example, the first edge server compares the first IP address with the IP address to be verified, and in a case where the first IP address is the same as the IP address to be verified, the first edge server determines that the IP address to be verified is the real IP address of the terminal. In an example, in a case where the first IP address is different from the IP address to be verified, the first edge server determines that the IP address to be verified is a non-real IP address of the terminal.

In the embodiment of the present disclosure, by using the first edge server to verify the IP address provided by the terminal, a problem of lack of effective means to verify the IP address provided by the terminal in the edge computing scenario may be resolved, and communication security of the edge computing scenario may be improved.

Embodiments of the present disclosure also provide a method of IP address verification for an edge computing scenario. The method may be performed by an edge server, and the edge server may be the second edge server described above. As shown in FIG. 18, the method may include but is not limited to the following steps 1801 to 1803.

In step 1801, the second edge server obtains an IP address to be verified and first verification information of the IP address to be verified provided by a terminal.

In an implementation, the second edge server receives the IP address to be verified and the first verification information of the IP address to be verified sent by the terminal. Or, in an implementation, the second edge server receives the IP address to be verified and the first verification information sent by the first edge server, and the IP address to be verified and the first verification information are obtained by the first edge server from the terminal.

In an implementation, the first verification information is generated by the terminal based on the IP address to be verified and a SUPI; or, the first verification information includes a random number, which is obtained from a BSF after the terminal completes authentication with the BSF using a GBA authentication service; or, the first verification information includes an A-KID.

In step 1802, the second edge server sends the received first verification information to a NEF.

In an implementation, the first verification information is generated by the terminal based on the IP address to be verified and a SUPI. In this embodiment, the NEF sends the received first verification information to the BSF. The BSF receives the first verification information, and the BSF obtains a corresponding first IP address by querying according to the first verification information, and transmits the first IP address to the second edge server via the NEF. The BSF includes a plurality of pieces of verification information, one piece of verification information corresponds to one IP address, and each verification information is generated by the BSF based on the corresponding IP address and the SUPI corresponding to the IP address.

In an implementation, the first verification information includes the random number, and the random number is obtained from the BSF after the terminal completes authentication with the BSF using the GBA authentication service. In an example, in this embodiment, the NEF sends the received random number to the BSF. The BSF receives the random number, and the BSF determines an IMPI corresponding to the random number, determines the SUPI corresponding to the IMPI, determines the first IP address corresponding to the SUPI, and transmits the first IP address to the second edge server via the NEF. In an example, in this embodiment, the NEF sends the received random number to the BSF. The BSF includes a mapping relationship between an IP address and a random number. The BSF receives the random number, and may obtain the first IP address corresponding to the random number by querying based on the mapping relationship, and transmit the first IP address to the second edge server via the NEF.

In an implementation, the first authentication information includes the A-KID. In this embodiment, the NEF obtains the corresponding SUPI from an AAnF based on the received A-KID, and sends the SUPI to the BSF. The BSF includes a mapping relationship between an IP address and a SUPI. The BSF receives the SUPI, and may obtain the first IP address corresponding to the SUPI by querying according to the mapping relationship, and send the first IP address to the second edge server via the NEF.

In step 1803, the second edge server acquires the first IP address, and determines whether the IP address to be verified is a real IP address of the terminal according to the first IP address and the IP address to be verified.

In an example, the second edge server compares the first IP address with the IP address to be verified, and in a case where the first IP address is the same as the IP address to be verified, the second edge server determines that the IP address to be verified is the real IP address of the terminal. In an example, in a case where the first IP address is different from the IP address to be verified, the second edge server determines that the IP address to be verified is a non-real IP address of the terminal.

In the embodiment of the present disclosure, by using the second edge server to verify the IP address provided by the terminal, a problem of lack of effective means to verify the IP address provided by the terminal in the edge computing scenario may be resolved, and communication security of the edge computing scenario may be improved.

In the above embodiments provided in the present disclosure, the methods provided in embodiments of the present disclosure are introduced from the perspectives of the terminal, the first edge server, the second edge server, the NEF, and the BSF, respectively. In order to realize various functions in the methods provided by the above embodiments of the present disclosure, the terminal, the first edge server, the second edge server, the NEF, and the BSF may include a hardware structure, and a software module, to implement the above functions in the form of the hardware structure, the software module, or the hardware structure plus the software module. A certain function of the above functions may be implemented in the form of the hardware structure, the software module, or the hardware structure plus the software module.

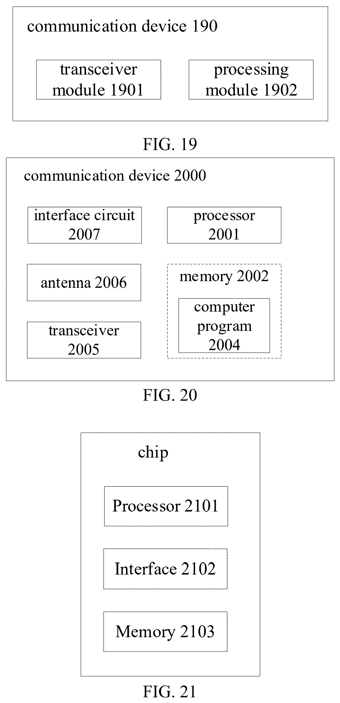

Please refer to FIG. 19, FIG. 19 is a schematic diagram illustrating a structure of a communication device 190 according to an embodiment of the present disclosure. The communication device 190 shown in FIG. 19 may include a transceiver module 1901 and a processing module 1902. The transceiver module 1901 may include a transmitting module and/or a receiving module, the transmitting module is configured to realize a transmitting function, the receiving module is configured to realize a receiving function, and the transceiver module 1901 can realize the transmitting function and/or the receiving function.

The communication device 190 may be a BSF, may also be a device in the BSF, and may also be a device that can be matched and used with the BSF. The communication device 190 may be a terminal, may also be a device in the terminal, and may also be a device that can be matched and used with the terminal. Alternatively, the communication device 190 may be a first edge server, or a device in the first edge server, or a device that can be matched and used with the first edge server. Alternatively, the communication device 190 may be a second edge server, or a device in the second edge server, or a device that can be matched and used with the second edge server. The communication device 190 may be a NEF, may also be a device in the NEF, and may also be a device that can be matched and used with the NEF.

The communication device 190 is the BSF: the processing module 1902 is configured to acquire an IP address to be verified and first verification information of the IP address to be verified provided by a terminal; and the processing module 1902 is further configured to determine whether the IP address to be verified is a real IP address of the terminal according to the IP address to be verified and/or the first verification information.

In an implementation, the processing module 1902 is specifically configured to: acquire the IP address to be verified and the first verification information of the IP address to be verified provided by the terminal from a NEF.

In an implementation, the first verification information is generated based on the IP address to be verified and a SUPI. In an embodiment of the present disclosure, the processing module 1902 is specifically configured to: determine second verification information according to the IP address to be verified; determine whether the first verification information is the same as the second verification information; and in a case where the first verification information is the same as the second verification information, determine that the IP address to be verified is the real IP address of the terminal.

In an implementation, the processing module 1902 is specifically configured to: acquire the second verification information corresponding to the IP address to be verified from a plurality of pieces of verification information. One IP address corresponds to one piece of verification information, and the plurality of pieces of verification information are generated by the BSF based on IP addresses and SUPIs corresponding to the IP addresses respectively.

In an embodiment of the present disclosure, the processing module 1902 is specifically configured to: acquire a first IP address corresponding to the first verification information from a plurality of pieces of verification information, in which one IP address corresponds to one piece of verification information, and the plurality of pieces of verification information are generated by the BSF based on IP addresses and SUPIs corresponding to the IP addresses respectively; determine whether the first IP address is the same as the IP address to be verified; and in a case where the first IP address is the same as the IP address to be verified, determine that the IP address to be verified is the real IP address of the terminal.

In an implementation, the processing module 1902 is further configured to generate the plurality of pieces of verification information. The processing module 1902 is specifically configured to: for each IP address among the IP addresses, perform hash processing on the each IP address and a SUPI corresponding to the each IP address, to obtain verification information of the each IP address; or for each IP address among the IP addresses, derive, according to each IP address and a SUPI corresponding to the each IP address, verification information of the each IP address by using a KDF.

In an implementation, the first verification information includes a random number. The random number is acquired from the BSF by the terminal after completing an authentication with the BSF using a generic bootstrapping architecture (GBA) authentication service. In an embodiment of the present disclosure, the processing module 1902 is specifically configured to: determine an IMPI corresponding to the random number; determine a first SUPI corresponding to the IMPI; and determine, according to the first SUPI and the IP address to be verified, whether the IP address to be verified is the real IP address of the terminal.

In an implementation, the first verification information includes an A-KID. In an embodiment of the present disclosure, the processing module 1902 is specifically configured to: acquire a first SUPI corresponding to the A-KID from a NEF; and determine, according to the first SUPI and the IP address to be verified, whether the IP address to be verified is the real IP address of the terminal.

In an implementation, the processing module 1902 is further configured to determine, based on a correspondence between an IP address and a SUPI, a first IP address corresponding to the first SUPI; determine whether the first IP address is the same as the IP address to be verified; in a case where the first IP address is the same as the IP address to be verified, determine that the IP address to be verified is the real IP address of the terminal.

In an implementation, the processing module 1902 is further configured to determine, based on a correspondence between an IP address and a SUPI, a second SUPI corresponding to the IP address to be verified; determine whether the first SUPI is the same as the second SUPI; in a case where the first SUPI is the same as the second SUPI, determine that the IP address to be verified is the real IP address of the terminal.

In an implementation, the processing module 1902 is further configured to determine that the IP address to be verified is a non-real IP address of the terminal; the transceiver module 1901 is configured to send an error message to a NEF, in which the error message is forwarded by the NEF to a first edge server or a second edge server.

The communication device 190 is a terminal: the transceiver module 1901 is configured to send an IP address to be verified and first verification information of the IP address to be verified to a first edge server or a second edge server, to send the IP address to be verified and the first verification information to the BSF via the edge server, such as the first edge server or the second edge server, and a NEF. The first verification information is used for a BSF to determine whether the IP address to be verified is a real IP address of the terminal.

In an implementation, the processing module 1902 is further configured to determine a SUPI; and generate the first verification information of the IP address to be verified according to the IP address to be verified and the SUPI.

In an implementation, the processing module 1902 is further configured to perform hash processing on the IP address to be verified and the SUPI to obtain the first verification information of the IP address to be verified; or derive, according to the IP address to be verified and the SUPI, the first verification information of the IP address to be verified by using a KDF.

In an implementation, the first verification information includes a random number, and the random number is acquired from the BSF by the terminal after completing an authentication with the BSF using a GBA authentication service.; or the first verification information includes an A-KID.

The communication device 190 is a first edge server: the transceiver module 1901 is configured to: receive an IP address to be verified and first verification information of the IP address to be verified sent by a terminal; send the IP address to be verified and the first verification information; in which the first verification information is used for a BSF to determine whether the IP address to be verified is a real IP address of the terminal.

In an implementation, the transceiver module 1901 is further configured to send the IP address to be verified and the first verification information to a second edge server; or send the IP address to be verified and the first verification information to a NEF.

In an implementation, the transceiver module 1901 is further configured to receive an error message sent by a NEF, in which the error message is sent to the NEF in a case where the BSF determines that the IP address to be verified is a non-real IP address of the terminal; or receive an error message sent by a second edge server, in which the error message is sent to a NEF in a case where the BSF determines that the IP address to be verified is a non-real IP address of the terminal, and is forwarded by the NEF to the second edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the first verification information includes an A-KID.

The communication device 190 is a second edge server: the processing module 1902 is configured to acquire an IP address to be verified and first verification information of the IP address to be verified provided by a terminal; and the transceiver module 1901 is configured to send the IP address to be verified and the first verification information to a NEF; in which the first verification information is used for a BSF to determine whether the IP address to be verified is a real IP address of the terminal.

In an implementation, the transceiver module 1901 is configured to receive the IP address to be verified and the first verification information sent by the terminal; or receive the IP address to be verified and the first verification information sent by a first edge server, in which the IP address to be verified and the first verification information are acquired by the first edge server from the terminal.

In an implementation, the transceiver module 1901 is further configured to receive an error message sent by the NEF, in which the error message is sent to the NEF in a case where the BSF determines that the IP address to be verified is a non-real IP address of the terminal.

In an implementation, the transceiver module 1901 is further configured to send the error message to a first edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the first verification information includes an A-KID.

The communication device 190 is a NEF: the processing module 1902 is configured to acquire an IP address to be verified and first verification information of the IP address to be verified provided by a terminal; and the transceiver module 1901 is configured to send the IP address to be verified and/or the first verification information to a BSF; in which the first verification information is used for the BSF to determine whether the IP address to be verified is a real IP address.

In an implementation, the transceiver module 1901 is further configured to receive the IP address to be verified and the first verification information sent by a first edge server; or receive the IP address to be verified and the first verification information sent by a second edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the transceiver module 1901 is further configured to send the IP address to be verified and the first verification information to the BSF.

In an implementation, the first verification information includes an A-KID. The processing module 1902 is configured to: acquire, from an AAnF, a first SUPI corresponding to the A-KID; and send the IP address to be verified and the first verification information to the BSF, in which the first SUPI is used for the BSF to determine whether the IP address to be verified is the real IP address of the terminal.

In an implementation, the transceiver module 1901 is further configured to receive an error message sent by the BSF, in which the error message is sent to the NEF in a case where the BSF determines that the IP address to be verified is a non-real IP address of the terminal; and send the error message to a first edge server or a second edge server.

Regarding the apparatus in the foregoing embodiments, a specific manner in which each module executes operations has been described in detail in embodiments related to the method, and may not be described in detail here.

Please refer to FIG. 20, FIG. 20 is a schematic diagram illustrating a structure of another communication device 2000 according to an embodiment of the present disclosure. The communication device 2000 may be a BSF, a terminal, a first edge server, a second edge server, an NEF, or a chip, a chip system, or a processor that supports the BSF to implement the above method, or a chip, a chip system, or a processor that supports the terminal to implement the above method, or a chip, a chip system, or a processor that supports the first edge server to implement the above method, or a chip, a chip system, or a processor that supports the second edge server to implement the above method, or a chip, a chip system, or a processor that supports the NEF to implement the above method. The device may be configured to implement the methods described in the above method embodiments, and details may refer to descriptions in the above method embodiments.

The communications device 2000 may include one or more processors 2001. The processor 2001 may be a general-purpose processor or a special-purpose processor. For example, the communications device 2000 may be a baseband processor or a central processor. The baseband processor can be configured to process communication protocols and communication data, and the central processor can be configured to control a communication device (such as a base station, a baseband chip, a terminal, a terminal chip, a DU or a CU, etc.) and execute a computer program, to process data of the computer program.

In an example, the communication device 2000 may further include one or more memories 2002, on which a computer program 2004 may be stored, and the processor 2001 executes the computer program 2004, so that the communication device 2000 executes the method described in the foregoing method embodiments. In an example, the memory 2002 may further have data stored thereon. The communication device 2000 and the memory 2002 may be set separately or integrated together.

In an example, the communication device 2000 may further include a transceiver 2005 and an antenna 2006. The transceiver 2005 may be referred to as a transceiver unit, a transceiver, or a transceiver circuit, etc., and is configured to implement a transceiver function. The transceiver 2005 may include a receiver and a transmitter, and the receiver may be referred to as a receiving device or a receiving circuit, etc., for realizing a receiving function; the transmitter may be referred to as a transmitting device, or a transmitting circuit, for realizing a transmitting function.

In an example, the communication device 2000 may further include one or more interface circuits 2007. The interface circuit 2007 is configured to receive code instructions and transmit the code instructions to the processor 2001. The processor 2001 runs the code instructions to enable the communication device 2000 to execute the methods as described in the foregoing method embodiments.

The communication device 2000 is a BSF: the processor 2001 is configured to execute step 505a in FIG. 5a; execute step 505b in FIG. 5b; execute step 506c in FIG. 5c; execute step 604a in FIG. 6a; execute step 604b in FIG. 6b; execute step 605c in FIG. 6c; execute step 704a in FIG. 7a; execute step 704b in FIG. 7b; execute step 705c in FIG. 7c; execute step 801 and step 802 in FIG. 8; execute step 1304 in FIG. 13; or execute step 1405 in FIG. 14. The transceiver 2005 is configured to execute step 1305 in FIG. 13; or execute step 1406 in FIG. 14.

The communication device 2000 is a terminal: the transceiver 2005 is configured to execute step 501a in FIG. 5a; execute step 501b in FIG. 5b; execute step 501c in FIG. 5c; execute step 601a in FIG. 6a; execute step 601b in FIG. 6b; execute step 601c in FIG. 6c; execute step 701a in FIG. 7a; execute step 701b in FIG. 7b; execute step 701c in FIG. 7c; or execute step 901 in FIG. 9.

The communication device 2000 is a first edge server: the transceiver 2005 is configured to execute step 502a in FIG. 5a; execute step 502b in FIG. 5b; execute step 502c in FIG. 5c; execute step 602a in FIG. 6a; execute step 602b in FIG. 6b; execute step 602c in FIG. 6c; execute step 1001 and step 1002 in FIG. 10; execute step 1301 and step 1302 in FIG. 13; execute step 1401 and step 1402 in FIG. 14; execute step 1501 and step 1502 in FIG. 15; or execute step 1701 and step 1702 in FIG. 17. The processor 2001 is used to execute step 1503 in FIG. 15; or execute step 1703 in FIG. 17.

The communication device 2000 is a second edge server: the transceiver 2005 is configured to execute step 503a in FIG. 5a; execute step 503b in FIG. 5b; execute step 503b in FIG. 5b; execute step 702a in FIG. 7a; execute step 702b in FIG. 7b; execute step 702c in FIG. 7c; execute step 1102 in FIG. 11; execute step 1301 and step 1302 in FIG. 13; execute step 1401 and step 1402 in FIG. 14; execute step 1602 in FIG. 16; or execute step 1802 in FIG. 18. The processor 2001 is configured to execute step 1101 in FIG. 11; execute step 1601 and step 1603 in FIG. 16; or execute step 1801 and step 1803 in FIG. 18.

The communication device 2000 is a NEF: the transceiver 2005 is configured to perform step 504a in FIG. 5a; perform step 504b in FIG. 5b; perform step 505c in FIG. 5c; perform step 603a in FIG. 6a; perform step 603b in FIG. 6b; perform step 604c in FIG. 6c; perform step 703a in FIG. 7a; perform step 703b in FIG. 7b; perform step 704c in FIG. 7c; perform step 1202 in FIG. 12; perform step 1303 and step 1307 in FIG. 13; or perform step 1404 and step 1408 in FIG. 14. The processor 2001 is configured to perform step 504c in FIG. 5c; perform step 603c in FIG. 6c; perform step 703c in FIG. 7c; perform step 1201 in FIG. 12; perform step 1306 in FIG. 13; or perform step 1407 in FIG. 14.

In an implementation, the processor 2001 may include a transceiver for implementing receiving and transmitting functions. For example, the transceiver can be a transceiver circuit, or an interface, or an interface circuit. Transceiver circuits, interfaces or interface circuits for realizing the receiving and transmitting functions can be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor 2001 may store a computer program, and the computer program runs on the processor 2001 to enable the communication device 2000 to execute the methods as described in the foregoing method embodiments. The computer program may be solidified in the processor 2001, and in this case, the processor 2001 may be implemented by hardware.

In an implementation, the communication device 2000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs), etc.

The communication device as described in the above embodiments may be a network device or a terminal (such as the first terminal in the foregoing method embodiments), but the scope of the communication device described in the present disclosure is not limited thereto, and a structure of the communication device may not be subject to FIG. 20. The communication device may be a stand-alone device or may be a part of a larger device. For example, the communication device may be:
(1) a stand-alone integrated circuit (IC), or a chip, or a system on chip or a subsystem;
(2) a set of one or more ICs, In an example, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

For a case where the communication device may be a chip or a chip system, reference may be made to a schematic diagram illustrating a structure of a chip shown in FIG. 21. The chip shown in FIG. 21 includes a processor 2101 and an interface 2102. The number of processors 2101 may be one or more, and the number of interfaces 2102 may be more than one.

For a chip used to implement functions of the BSF in the embodiment of the present disclosure:

the processor 2101 is configured to acquire an IP address to be verified and first verification information of the IP address to be verified provided by a terminal; and the processor 2101 is further configured to determine whether the IP address to be verified is a real IP address of the terminal according to the IP address to be verified and/or the first verification information.

In an implementation, the processor 2101 is specifically configured to: acquire the IP address to be verified and the first verification information of the IP address to be verified provided by the terminal from a NEF.

In an implementation, the first verification information is generated based on the IP address to be verified and a SUPI. In an embodiment of the present disclosure, the processor 2101 is specifically configured to: determine second verification information according to the IP address to be verified; determine whether the first verification information is the same as the second verification information; and in a case where the first verification information is the same as the second verification information, determine that the IP address to be verified is the real IP address of the terminal.

In an implementation, the processor 2101 is specifically configured to: acquire the second verification information corresponding to the IP address to be verified from a plurality of pieces of verification information. One IP address corresponds to one piece of verification information, and the plurality of pieces of verification information are generated by the BSF based on IP addresses and SUPIs corresponding to the IP addresses respectively.

In an embodiment of the present disclosure, the processor 2101 is specifically configured to: acquire a first IP address corresponding to the first verification information from a plurality of pieces of verification information, in which one IP address corresponds to one piece of verification information, and the plurality of pieces of verification information are generated by the BSF based on IP addresses and SUPIs corresponding to the IP addresses respectively; determine whether the first IP address is the same as the IP address to be verified; and in a case where the first IP address is the same as the IP address to be verified, determine that the IP address to be verified is the real IP address of the terminal.

In an implementation, the processor 2101 is further configured to generate the plurality of pieces of verification information. The processor 2101 is specifically configured to: for each IP address among the IP addresses, perform hash processing on the each IP address and a SUPI corresponding to the each IP address, to obtain verification information of the each IP address; or for each IP address among the IP addresses, derive, according to each IP address and a SUPI corresponding to the each IP address, verification information of the each IP address by using a KDF.

In an implementation, the first verification information includes a random number. The random number is acquired from the BSF by the terminal after completing an authentication with the BSF using a generic bootstrapping architecture (GBA) authentication service. In an embodiment of the present disclosure, the processor 2101 is specifically configured to: determine an IMPI corresponding to the random number; determine a first SUPI corresponding to the IMPI; and determine, according to the first SUPI and the IP address to be verified, whether the IP address to be verified is the real IP address of the terminal.

In an implementation, the first verification information includes an A-KID. In an embodiment of the present disclosure, the processor 2101 is specifically configured to: acquire a first SUPI corresponding to the A-KID from a NEF; and determine, according to the first SUPI and the IP address to be verified, whether the IP address to be verified is the real IP address of the terminal.

In an implementation, the processor 2101 is further configured to determine, based on a correspondence between an IP address and a SUPI, a first IP address corresponding to the first SUPI; determine whether the first IP address is the same as the IP address to be verified; in a case where the first IP address is the same as the IP address to be verified, determine that the IP address to be verified is the real IP address of the terminal.

In an implementation, the processor 2101 is further configured to determine, based on a correspondence between an IP address and a SUPI, a second SUPI corresponding to the IP address to be verified; determine whether the first SUPI is the same as the second SUPI; in a case where the first SUPI is the same as the second SUPI, determine that the IP address to be verified is the real IP address of the terminal.

In an implementation, the processor 2101 is further configured to determine that the IP address to be verified is a non-real IP address of the terminal; the interface 2102 is configured to send an error message to a NEF, in which the error message is forwarded by the NEF to a first edge server or a second edge server.

For a case where a chip is used to implement functions of the terminal in the embodiment of the present disclosure:
the communication device 190 is the terminal: the interface 2102 is configured to send an IP address to be verified and first verification information of the IP address to be verified to a first edge server or a second edge server, to send the IP address to be verified and the first verification information to the BSF via the edge server, such as the first edge server or the second edge server, and a NEF. The first verification information is used for a BSF to determine whether the IP address to be verified is a real IP address of the terminal.

In an implementation, the processor 2101 is further configured to determine a SUPI; and generate the first verification information of the IP address to be verified according to the IP address to be verified and the SUPI.

In an implementation, the processor 2101 is further configured to perform hash processing on the IP address to be verified and the SUPI to obtain the first verification information of the IP address to be verified; or derive, according to the IP address to be verified and the SUPI, the first verification information of the IP address to be verified by using a KDF.

In an implementation, the first verification information includes a random number, and the random number is acquired from the BSF by the terminal after completing an authentication with the BSF using a GBA authentication service.; or the first verification information includes an A-KID.

For a case where a chip is used to implement functions of the first edge server in the embodiment of the present disclosure:
the interface 2102 is configured to: receive an IP address to be verified and first verification information of the IP address to be verified sent by a terminal; send the IP address to be verified and the first verification information; in which the first verification information is used for a BSF to determine whether the IP address to be verified is a real IP address of the terminal.

In an implementation, the interface 2102 is further configured to send the IP address to be verified and the first verification information to a second edge server; or send the IP address to be verified and the first verification information to a NEF.

In an implementation, the interface 2102 is further configured to receive an error message sent by a NEF, in which the error message is sent to the NEF in a case where the BSF determines that the IP address to be verified is a non-real IP address of the terminal; or receive an error message sent by a second edge server, in which the error message is sent to a NEF in a case where the BSF determines that the IP address to be verified is a non-real IP address of the terminal, and is forwarded by the NEF to the second edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the first verification information includes an A-KID.

For a case where a chip is used to implement functions of the second edge server in the embodiment of the present disclosure: the processor 2101 is configured to acquire an IP address to be verified and first verification information of the IP address to be verified provided by a terminal; and the interface 2102 is configured to send the IP address to be verified and the first verification information to a NEF; in which the first verification information is used for a BSF to determine whether the IP address to be verified is a real IP address of the terminal.

In an implementation, the interface 2102 is configured to receive the IP address to be verified and the first verification information sent by the terminal; or receive the IP address to be verified and the first verification information sent by a first edge server, in which the IP address to be verified and the first verification information are acquired by the first edge server from the terminal.

In an implementation, the interface 2102 is further configured to receive an error message sent by the NEF, in which the error message is sent to the NEF in a case where the BSF determines that the IP address to be verified is a non-real IP address of the terminal.

In an implementation, the interface 2102 is further configured to send the error message to a first edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the first verification information includes an A-KID.

For a case where a chip is used to implement functions of the NEF in the embodiment of the present disclosure: the processor 2101 is configured to acquire an IP address to be verified and first verification information of the IP address to be verified provided by a terminal; and the interface 2102 is configured to send the IP address to be verified and/or the first verification information to a BSF; in which the first verification information is used for the BSF to determine whether the IP address to be verified is a real IP address.

In an implementation, the interface 2102 is further configured to receive the IP address to be verified and the first verification information sent by a first edge server; or receive the IP address to be verified and the first verification information sent by a second edge server.

In an implementation, the first verification information is generated by the terminal based on the IP address to be verified and the SUPI; or, the first verification information includes a random number, and the random number is acquired from the BSF after the terminal completes authentication with the BSF using a GBA authentication service; or, the interface 2102 is further configured to send the IP address to be verified and the first verification information to the BSF.

In an implementation, the first verification information includes an A-KID. The processor 2101 is configured to: acquire, from an AAnF, a first SUPI corresponding to the A-KID; and send the IP address to be verified and the first verification information to the BSF, in which the first SUPI is used for the BSF to determine whether the IP address to be verified is the real IP address of the terminal.

In an implementation, the interface 2102 is further configured to receive an error message sent by the BSF, in which the error message is sent to the NEF in a case where the BSF determines that the IP address to be verified is a non-real IP address of the terminal; and send the error message to a first edge server or a second edge server.

In an example, the chip further includes a memory 2103, and the memory 2103 is used to store necessary computer programs and data.

Those skilled in the related art may understand that various illustrative logical blocks and steps listed in embodiments of the present disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A system of IP address verification for an edge computing scenario is further provided in embodiments of the disclosure. The system includes a communication device serving as a BSF, a communication device serving as a terminal, a communication device serving as a first edge server, a communication device serving as a second edge server, and a communication device serving as a BSF in embodiments of FIG. 19, or the system includes a communication device serving as a BSF, a communication device serving as a terminal, a communication device serving as a first edge server, a communication device serving as a second edge server, and a communication device serving as a BSF in embodiments of FIG. 20.

The present disclosure also provides an IP address verification for an edge computing scenario. The method is applied to a core network device. The core network device includes a BSF and a NEF. The method includes, but is not limited to, the following steps a, b and c.

At step a, the NEF acquires an IP address to be verified and first verification information of the IP address to be verified provided by a terminal.

At step b, the NEF sends the IP address to be verified and/or the first verification information to the BSF.

In an implementation, the NEF receives the IP address to be verified and the first verification information sent by the edge server. The edge server may be the first edge server or the second edge server.

In a possible implementation, the first verification information may be generated by a terminal based on the IP address to be verified and a SUPI, or the first verification information includes a random number. In this embodiment, the NEF may directly send the received IP address to be verified and the first verification information to the BSF.

In a possible implementation, the first verification information may include an A-KID. In this embodiment, the NEF obtains a first SUPI corresponding to the A-KID from an AAnF in the core network device. The NEF sends the IP address to be verified and the first SUPI to the BSF.

In step c, the BSF determines whether the IP address to be verified is a real IP address of the terminal according to the IP address to be verified and/or the first verification information.

In an implementation, the first verification information is generated based on the IP address to be verified and the SUPI. In this embodiment, the BSF may determine second verification information according to the IP address to be verified. The BSF may determine whether the first verification information is the same as the second verification information. The BSF may, in a case where the first verification information is the same as the second verification information, determine that the IP address to be verified is the real IP address of the terminal.

As an example, an implementation of the BSF determining the second verification information according to the IP address to be verified can be as follows: the BSF acquiring the second verification information corresponding to the IP address to be verified from a plurality of pieces of verification information; in which one IP address corresponds to one piece of verification information, and the plurality of pieces of verification information are generated by the BSF based on IP addresses and SUPIs corresponding to the IP addresses respectively.

In another implementation, the first verification information is generated based on the IP address to be verified and the SUPI. In this embodiment, the BSF acquires a first IP address corresponding to the first verification information from a plurality of pieces of verification information. The BSF determine whether the first IP address is the same as the IP address to be verified. the BSF, determine, in a case where the first IP address is the same as the IP address to be verified, that the IP address to be verified is the real IP address of the terminal.

In another implementation, the first verification information includes a random number. In this embodiment, the BSF determines an IP multimedia private identity (IMPI) corresponding to the random number. The BSF determines a first SUPI corresponding to the IMPI. The BSF determines, according to the first SUPI and the IP address to be verified, whether the IP address to be verified is the real IP address of the terminal.

In another implementation, the first verification information includes the A-KID. In this embodiment, the BSF receives the first SUPI sent by the NEF. The BSF determines whether the IP address to be verified is the real IP address of the terminal according to the received first SUPI and the IP address to be verified.

As an example, an implementation of the BSF determining, according to the first SUPI and the IP address to be verified, whether the IP address to be verified is the real IP address of the terminal may be as follows: the BSF determines, based on a correspondence between an IP address and a SUPI, a first IP address corresponding to the first SUPI; the BSF determines whether the first IP address is the same as the IP address to be verified; and in a case where the first IP address is the same as the IP address to be verified, the BSF determines that the IP address to be verified is the real IP address of the terminal.

As another example, the implementation of the BSF determining, according to the first SUPI and the IP address to be verified, whether the IP address to be verified is the real IP address of the terminal may be as follows: the BSF determines, based on a correspondence between an IP address and a SUPI, a second SUPI corresponding to the IP address to be verified; the BSF determines whether the first SUPI is the same as the second SUPI; and in a case where the first SUPI is the same as the second SUPI, the BSF determines that the IP address to be verified is the real IP address of the terminal.

In an example, in an embodiment of the present disclosure, the BSF determines that the IP address to be verified is a non-real IP address of the terminal; the BSF sends an error message to the NEF; and the NEF sends the error message to an edge server.

The present disclosure further provides a core network device. The core network device includes a BSF and a NEF, in which the NEF is configured to implement the method described in the above NEF side embodiment, and the BSF is configured to implement the method described in the above BSF side embodiment.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those ordinary skilled in the art can understand that first, second, and other numbers involved in the present disclosure are only for convenience of description, and are not used to limit the scope of embodiments of the present disclosure, and does not indicate an order.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific disclosure and a design constraint of the technical solution. Those skilled in the art may adopt different methods for each specific disclosure to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method of Internet protocol (IP) address verification for an edge computing scenario, performed by a binding support function (BSF), comprising:
acquiring an IP address to be verified and first verification information of the IP address to be verified provided by a terminal; and
determining whether the IP address to be verified is a real IP address of the terminal according to the IP address to be verified and/or the first verification information.

2. The method according to claim 1, wherein acquiring the IP address to be verified and the first verification information of the IP address to be verified provided by the terminal comprises:
acquiring the IP address to be verified and the first verification information of the IP address to be verified provided by the terminal from a network exposure function (NEF).

3. The method according to claim 1 or 2, wherein the first verification information is generated based on the IP address to be verified and a subscription permanent identifier (SUPI), and determining whether the IP address to be verified is the real IP address of the terminal according to the IP address to be verified and/or the first verification information comprises:
determining second verification information according to the IP address to be verified;
determining whether the first verification information is the same as the second verification information; and
in a case where the first verification information is the same as the second verification information, determining that the IP address to be verified is the real IP address of the terminal.

4. The method according to claim 3, wherein determining the second verification information according to the IP address to be verified comprises:
acquiring the second verification information corresponding to the IP address to be verified from a plurality of pieces of verification information;
wherein one IP address corresponds to one piece of verification information, and the plurality of pieces of verification information are generated by the BSF based on IP addresses and SUPIs corresponding to the IP addresses respectively.

5. The method according to claim 1 or 2, wherein the first verification information is generated based on the IP address to be verified and a SUPI, and determining whether the IP address to be verified is the real IP address of the terminal according to the IP address to be verified and/or the first verification information comprises:
acquiring a first IP address corresponding to the first verification information from a plurality of pieces of verification information, wherein one IP address corresponds to one piece of verification information, and the plurality of pieces of verification information are generated by the BSF based on IP addresses and SUPIs corresponding to the IP addresses respectively;
determining whether the first IP address is the same as the IP address to be verified; and
in a case where the first IP address is the same as the IP address to be verified, determining that the IP address to be verified is the real IP address of the terminal.

6. The method according to claim 4 or 5, wherein generating the plurality of pieces of verification information comprises:
for each IP address among the IP addresses, performing hash processing on the each IP address and a SUPI corresponding to the each IP address, to obtain verification information of the each IP address; or
for each IP address among the IP addresses, deriving, according to each IP address and a SUPI corresponding to the each IP address, verification information of the each IP address by using a key derivation function (KDF).

7. The method according to claim 1 or 2, wherein the first verification information comprises a random number, and determining whether the IP address to be verified is the real IP address of the terminal according to the IP address to be verified and/or the first verification information comprises:
determining an IP multimedia private identity (IMPI) corresponding to the random number;
determining a first SUPI corresponding to the IMPI; and
determining, according to the first SUPI and the IP address to be verified, whether the IP address to be verified is the real IP address of the terminal.

8. The method according to claim 1 or 2, wherein the first verification information comprises an authentication and key management for applications (AKMA) key identifier (A-KID), and determining whether the IP address to be verified is the real IP address of the terminal according to the IP address to be verified and/or the first verification information comprises:
acquiring a first SUPI corresponding to the A-KID from a NEF; and
determining, according to the first SUPI and the IP address to be verified, whether the IP address to be verified is the real IP address of the terminal.

9. The method according to claim 7 or 8, wherein determining, according to the first SUPI and the IP address to be verified, whether the IP address to be verified is the real IP address of the terminal comprises:
determining, based on a correspondence between an IP address and a SUPI, a first IP address corresponding to the first SUPI;
determining whether the first IP address is the same as the IP address to be verified;
in a case where the first IP address is the same as the IP address to be verified, determining that the IP address to be verified is the real IP address of the terminal.

10. The method according to claim 7 or 8, wherein determining, according to the first SUPI and the IP address to be verified, whether the IP address to be verified is the real IP address of the terminal comprises:
determining, based on a correspondence between an IP address and a SUPI, a second SUPI corresponding to the IP address to be verified;
determining whether the first SUPI is the same as the second SUPI;
in a case where the first SUPI is the same as the second SUPI, determining that the IP address to be verified is the real IP address of the terminal.

11. The method according to any one of claims 1 to 10, further comprising:
determining that the IP address to be verified is a non-real IP address of the terminal; and
sending an error message to a NEF, wherein the error message is forwarded by the NEF to a first edge server or a second edge server.

12. A method of Internet protocol (IP) address verification for an edge computing scenario, performed by a terminal, comprising:
sending an IP address to be verified and first verification information of the IP address to be verified to a first edge server or a second edge server;
wherein the first verification information is used for a binding support function (BSF) to determine whether the IP address to be verified is a real IP address of the terminal.

13. The method according to claim 12, further comprising:
determining a subscription permanent identifier (SUPI); and
generating the first verification information of the IP address to be verified according to the IP address to be verified and the SUPI.

14. The method according to claim 13, wherein generating the first verification information of the IP address to be verified according to the IP address to be verified and the SUPI comprises:
performing hash processing on the IP address to be verified and the SUPI to obtain the first verification information of the IP address to be verified; or
deriving, according to the IP address to be verified and the SUPI, the first verification information of the IP address to be verified by using a key derivation function (KDF).

15. The method according to claim 14, wherein
the first verification information comprises a random number; or,
the first verification information comprises an authentication and key management for applications (AKMA) key identifier (A-KID).

16. A method of Internet protocol (IP) address verification for an edge computing scenario, performed by a first edge server, comprising:
receiving an IP address to be verified and first verification information of the IP address to be verified sent by a terminal;
sending the IP address to be verified and the first verification information;
wherein the first verification information is used for a binding support function (BSF) to determine whether the IP address to be verified is a real IP address of the terminal.

17. The method according to claim 16, wherein sending the IP address to be verified and the first verification information comprises:
sending the IP address to be verified and the first verification information to a second edge server; or
sending the IP address to be verified and the first verification information to a network exposure function (NEF).

18. The method according to claim 16, further comprising:
receiving an error message sent by a NEF, wherein the error message is sent to the NEF in a case where the BSF determines that the IP address to be verified is a non-real IP address of the terminal; or
receiving an error message sent by a second edge server, wherein the error message is sent to a NEF in a case where the BSF determines that the IP address to be verified is a non-real IP address of the terminal, and is forwarded by the NEF to the second edge server.

19. A method of Internet protocol (IP) address verification for an edge computing scenario, performed by a second edge server, comprising:
acquiring an IP address to be verified and first verification information of the IP address to be verified provided by a terminal; and
sending the IP address to be verified and the first verification information to a network exposure function (NEF);
wherein the first verification information is used for a binding support function (BSF) to determine whether the IP address to be verified is a real IP address of the terminal.

20. The method according to claim 19, wherein acquiring the IP address to be verified and the first verification information of the IP address to be verified provided by the terminal comprises:
receiving the IP address to be verified and the first verification information sent by the terminal; or
receiving the IP address to be verified and the first verification information sent by a first edge server, wherein the IP address to be verified and the first verification information are acquired by the first edge server from the terminal.

21. The method according to claim 19, further comprising:
receiving an error message sent by the NEF, wherein the error message is sent to the NEF in a case where the BSF determines that the IP address to be verified is a non-real IP address of the terminal.

22. The method according to claim 21, further comprising:
sending the error message to a first edge server.

23. A method of Internet protocol (IP) address verification for an edge computing scenario, performed by a network exposure function (NEF), comprising:
acquiring an IP address to be verified and first verification information of the IP address to be verified provided by a terminal; and
sending the IP address to be verified and/or the first verification information to a binding support function (BSF);
wherein the first verification information is used for the BSF to determine whether the IP address to be verified is a real IP address.

24. The method of claim 23, wherein acquiring the IP address to be verified and the first verification information of the IP address to be verified provided by the terminal comprises:
receiving the IP address to be verified and the first verification information sent by a first edge server; or
receiving the IP address to be verified and the first verification information sent by a second edge server.

25. The method according to claim 23 or 24, wherein
the first verification information is generated by the terminal based on the IP address to be verified and subscription permanent identifier (SUPI); or
the first verification information comprises a random number.

26. The method according to claim 25, wherein sending the IP address to be verified and/or the first verification information to the BSF comprises:
sending the IP address to be verified and the first verification information to the BSF.

27. The method according to claim 23 or 24, wherein the first verification information comprises an authentication and key management for applications (AKMA) key identifier (A-KID).

28. The method according to claim 27, wherein sending the IP address to be verified and/or the first verification information to the BSF comprises:
acquiring, from an AKMA anchor function (AAnF), a first SUPI corresponding to the A-KID; and
sending the IP address to be verified and the first verification information to the BSF, wherein the first SUPI is used for the BSF to determine whether the IP address to be verified is the real IP address of the terminal.

29. The method according to any one of claims 23 to 28, further comprising:
receiving an error message sent by the BSF, wherein the error message is sent to the NEF in a case where the BSF determines that the IP address to be verified is a non-real IP address of the terminal; and
sending the error message to a first edge server or a second edge server.

30. A method of Internet protocol (IP) address verification for an edge computing scenario, performed by a core network device comprising a binding support function (BSF) and a network exposure function (NEF), and the method comprising:
the NEF acquiring an IP address to be verified and first verification information of the IP address to be verified provided by a terminal;
the NEF sending the IP address to be verified and/or the first verification information to the BSF; and
the BSF determining whether the IP address to be verified is a real IP address of the terminal according to the IP address to be verified and/or the first verification information.

31. The method of claim 30, wherein the NEF acquiring the IP address to be verified and the first verification information of the IP address to be verified provided by the terminal comprises:
the NEF receiving the IP address to be verified and the first verification information sent by an edge server.

32. The method according to claim 30, wherein the NEF sending the IP address to be verified and/or the first verification information to the BSF comprises:
sending the IP address to be verified and the first verification information to the BSF.

33. The method according to claim 32, wherein the first verification information is generated based on the IP address to be verified and a subscription permanent identifier (SUPI), and the BSF determining whether the IP address to be verified is the real IP address of the terminal according to the IP address to be verified and/or the first verification information comprises:
the BSF determining second verification information according to the IP address to be verified;
the BSF determining whether the first verification information is the same as the second verification information; and
in a case where the first verification information is the same as the second verification information, the BSF determining that the IP address to be verified is the real IP address of the terminal.

34. The method according to claim 32, wherein the BSF determining the second verification information according to the IP address to be verified comprises:
the BSF acquiring the second verification information corresponding to the IP address to be verified from a plurality of pieces of verification information;
wherein one IP address corresponds to one piece of verification information, and the plurality of pieces of verification information are generated by the BSF based on IP addresses and SUPIs corresponding to the IP addresses respectively.

35. The method according to claim 32, wherein the first verification information is generated based on the IP address to be verified and a SUPI, and the BSF determining whether the IP address to be verified is the real IP address of the terminal according to the IP address to be verified and/or the first verification information comprises:
the BSF acquiring a first IP address corresponding to the first verification information from a plurality of pieces of verification information, wherein one IP address corresponds to one piece of verification information, and the plurality of pieces of verification information are generated by the BSF based on IP addresses and SUPIs corresponding to the IP addresses respectively;
the BSF determining whether the first IP address is the same as the IP address to be verified; and
in a case where the first IP address is the same as the IP address to be verified, the BSF determining that the IP address to be verified is the real IP address of the terminal.

36. The method according to claim 32, wherein the first verification information comprises a random number, and the BSF determining whether the IP address to be verified is the real IP address of the terminal according to the IP address to be verified and/or the first verification information comprises:
the BSF determining an IP multimedia private identity (IMPI) corresponding to the random number;
the BSF determining a first SUPI corresponding to the IMPI; and
the BSF determining, according to the first SUPI and the IP address to be verified, whether the IP address to be verified is the real IP address of the terminal.

37. The method according to claim 30, wherein the first verification information comprises an authentication and key management for applications (AKMA) key identifier (A-KID), the core network device further comprises an AKMA anchor function (AAnF), and the method further comprises:
the NEF acquiring, from the AAnF, a first SUPI corresponding to the A-KID;
and the NEF sending the IP address to be verified and/or the first verification information to the BSF comprises:
the NEF sending the IP address to be verified and the first SUPI to the BSF.

38. The method according to claim 37, wherein the BSF determining whether the IP address to be verified is the real IP address of the terminal according to the IP address to be verified and/or the first verification information comprises:
the BSF determining, according to the first SUPI and the IP address to be verified, whether the IP address to be verified is the real IP address of the terminal.

39. The method according to claim 37, wherein the BSF determining, according to the first SUPI and the IP address to be verified, whether the IP address to be verified is the real IP address of the terminal comprises:
the BSF determining, based on a correspondence between an IP address and a SUPI, a first IP address corresponding to the first SUPI;
the BSF determining whether the first IP address is the same as the IP address to be verified; and
in a case where the first IP address is the same as the IP address to be verified, the BSF determining that the IP address to be verified is the real IP address of the terminal.

40. The method according to claim 36 or 38, wherein the BSF determining, according to the first SUPI and the IP address to be verified, whether the IP address to be verified is the real IP address of the terminal comprises:
the BSF determining, based on a correspondence between an IP address and a SUPI, a second SUPI corresponding to the IP address to be verified;
the BSF determining whether the first SUPI is the same as the second SUPI; and
in a case where the first SUPI is the same as the second SUPI, the BSF determining that the IP address to be verified is the real IP address of the terminal.

41. The method according to any one of claims 30 to 40, further comprising:
the BSF determining that the IP address to be verified is a non-real IP address of the terminal;
the BSF sending an error message to the NEF; and
the NEF sending the error message to an edge server.

42. A core network device, comprising a binding support function (BSF) and a network exposure function (NEF), wherein
the NEF is configured to implement the method according to any one of claims 23 to 29; and
the BSF is configured to implement the method according to any one of claims 1 to 11.

43. A communication device, configured on a binding support function (BSF), comprising:
a processing module, configured to acquire an IP address to be verified and first verification information of the IP address to be verified provided by a terminal; and
the processing module further configured to determine whether the IP address to be verified is a real IP address of the terminal according to the IP address to be verified and/or the first verification information.

44. A communication device, configured in a terminal, comprising:
a transceiver module, configured to send an IP address to be verified and first verification information of the IP address to be verified to a first edge server or a second edge server;
wherein the first verification information is used for a binding support function (BSF) to determine whether the IP address to be verified is a real IP address of the terminal.

45. A communication device, configured in a first edge server, comprising:
a transceiver module, configured to receive an IP address to be verified and first verification information of the IP address to be verified sent by a terminal;
the transceiver module further configured to send the IP address to be verified and the first verification information;
wherein the first verification information is used for a binding support function (BSF) to determine whether the IP address to be verified is a real IP address of the terminal.

46. A communication device, configured in a second edge server, comprising:
a processing module, configured to acquire an IP address to be verified and first verification information of the IP address to be verified provided by a terminal; and
a transceiver module, configured to send the IP address to be verified and the first verification information to a network exposure function (NEF);
wherein the first verification information is used for a binding support function (BSF) to determine whether the IP address to be verified is a real IP address of the terminal.

47. A communication device, configured in a network exposure function (NEF), comprising:
a processing module, configured to acquire an IP address to be verified and first verification information of the IP address to be verified provided by a terminal;
a transceiver module, configured to send the IP address to be verified and/or the first verification information to a binding support function (BSF);
wherein the first verification information is used for the BSF to determine whether the IP address to be verified is a real IP address.

48. A communication device, comprising a processor and a memory having a computer program stored thereon, wherein the processor is configured to perform the computer program stored on the memory, causing the device to performs the method according to any one of claims 1 to 29.

49. A computer-readable storage medium for storing instructions which, when executed, cause the method according to any one of claims 1 to 29 to be implemented.
